# EUROPÄISCHE PATENTSCHRIFT

(11) **EP 2 404 114 B1**
(45) Veröffentlichungstag und Bekanntmachung des Hinweises auf die Patenterteilung: **23.11.2016**
(21) Anmeldenummer: 10714855.3
(22) Anmeldetag: 03.03.2010
(51) Int. Cl.: F24D 3/08, F24D 11/00, F24D 12/02, F24D 19/10

(54) **HEIZUNGSANLAGE ODER KÜHLUNGSANLAGE SOWIE VERFAHREN ZUM BETRIEB VON HEIZUNGSANLAGEN ODER KÜHLUNGSANLAGEN**
HEATING SYSTEM OR COOLING SYSTEM AND METHOD FOR OPERATING HEATING SYSTEMS OR COOLING SYSTEMS
INSTALLATION DE CHAUFFAGE OU INSTALLATION DE REFROIDISSEMENT ET PROCÉDÉ POUR FAIRE FONCTIONNER DES INSTALLATIONS DE CHAUFFAGE OU DES INSTALLATIONS DE REFROIDISSEMENT

(30) Priorität: 03.03.2009 DE 102009011115
(43) Veröffentlichungstag der Anmeldung: 11.01.2012
(73) Patentinhaber: Baunach, Hans-Georg, 52074 Aachen (DE)
(72) Erfinder: Baunach, Hans-Georg, 52074 Aachen (DE)
(74) Vertreter: Naeven, Ralf
(86) Internationale Anmeldenummer: PCT/DE2010/075022
(87) Internationale Veröffentlichungsnummer: WO 2010/099793

(56) Entgegenhaltungen:
- DE-A1- 10 245 571
- DE-A1- 19 633 930
- FR-A1- 2 634 873

## Beschreibung

Die Erfindung betrifft eine Heizungsanlage oder Kühlungsanlage sowie ein Verfahren zum Betrieb von Heizungsanlagen oder Kühlungsanlagen, wobei in der Heizungs- oder Kühlungsanlage Wärmetauscher zur Systemtrennung eingesetzt werden.

Wärmetauscher werden in Umlaufwasser-Heizungsanlagen als Systemtrennungen zwischen verschiedenen Anlagenteilen eingesetzt, um die einzelnen Fluidkreisläufe (Heizungswasser, Trinkwasser, Solarkreislauf mit Frostschutzmittel, nicht-diffusionsdichte Fußbodenheizkreise, drucklose Pufferspeicher, Wärmenetze) hydraulisch voneinander zu trennen. Dabei kommt es häufig zur Anhebung der Rücklauftemperatur auf der Primärseite zum Wärmeerzeuger, die den Wirkungsgrad der Gesamtanlage deutlich verschlechtern. Umgekehrt kommt es bei Wärmeerzeugern mit Rücklaufanhebung (Biomassekessel, Block-Heiz-Kraftwerke BHKW und Kraft-Wärme-Kopplungen KWK) häufig zur unerwünschten Vorlauftemperaturabsenkung, was den Nutzen der erzeugten Wärme mindert.

Aus der WO 2009/074145 A2 ist eine Heizungsanlage bekannt, bei der ein Niedertemperaturheizkreis an einem als Systemtrennung wirkenden Wärmetauscher angeschlossen ist. Der Wärmetauscher wird vom Ausgang einer Mischereinrichtung versorgt, dessen Eingänge mit dem Vorlauf eines Wärmeerzeugers und dem Rücklauf eines Hochtemperaturheizkreises verbunden sind. Somit wird dem Wärmetauscher entweder Heizfluid aus dem Vorlauf des Wärmeerzeugers, eine Mischung aus diesem Vorlauf und aus dem Rücklauf des Hochtemperaturheizkreises oder aus dem Rücklauf des Heizkreises alleine versorgt. Der primärseitige Ausgang des Wärmetauschers wird zum Beispiel einem kältesten Anschluss eines Pufferspeichers oder dem Rücklauf eines an Solarkollektoren angeschlossenen Wärmetauschers zugeführt. Zwischen der Mischereinrichtung und dem Eingang des Wärmetauschers sowie in der Rücklaufleitung des Wärmetauschers ist eine Pumpe nicht vorgesehen. Der Rücklauf des Wärmetauschers wird der Mischereinrichtung nicht zur Beimischung zugeführt, da dies zu einer Anhebung der Rücklauftemperatur führen würde, was wiederum nachteilig für den Wirkungsgrad der Gesamtanlage wäre. Die offenbarte Konstruktion hat als einen Nachteil, dass im Hochtemperaturkreis keine eigene Hochtemperaturkreis-Mischereinrichtung vorgesehen werden kann. Eine zu Mischzwecken im Hochtemperaturkreis vorgesehene Pumpe würde gegen die vor der Systemtrennung angeordnete Mischereinrichtung arbeiten und somit die Versorgung des als Systemtrennung dienenden Wärmetauschers stören. Des Weiteren ist nachteilig, dass die gemäß dem Stand der Technik offenbarte Anordnung in jedem Fall eine Kesselpumpe benötigt.

Alle hier für Wärmeerzeuger- und Verteileranlagen offenbarten Beschreibungen beziehen sich ebenso auf Kälteanlagen, bei denen es dann umgekehrt zur unerwünschten Absenkung der Rücklauftemperatur in Richtung zum Kälteerzeuger kommt.

Die hier betroffene Erfindung bezieht sich daher sowohl auf Heizungsanlagen als auch auf Kühlungsanlagen sowie die entsprechenden Verfahren zu deren Betrieb. Im Falle der Kühlung treten an die Stelle der Wärmeerzeuger Kälteerzeuger und Wärmesenken werden zu Kältesenken. Dort wo im Falle der Heizung Energie zur Wärmeerzeugung aufgebracht wird, wird sie im Falle der Kühlungsanlage zur Kälteerzeugung benötigt. Spielen Temperaturunterschiede eine Rolle, so werden im Vergleich zwischen Heizungsanlage und Kühlungsanlage die Angaben "Wärme" und "Kälte" vertauscht. Im Falle der Nutzung eines Pufferspeichers werden auf Grund der gravitationsbedingten Temperaturschichtung in Bezug auf die Pufferanschlüsse bei der Gegenüberstellung von Heizungs- und Kühlungsanlage die Angaben "oben" und unten" vertauscht. Mit dieser Maßgabe kann die folgende, zum Zwecke der Übersichtlichkeit auf den Fall der Heizung beschränkte Darstellung ohne weiteres auf den Fall der Kühlung übertragen werden.

Die Abhängigkeit des Gesamtwirkungsgrades der Wärmeerzeugung und -verteilung von der Rücklauftemperatur gilt besonders für hocheffiziente und regenerative Wärmeerzeuger wie Brennwertkessel sowie mit Pufferspeichern ausgestattete Wärmepumpen, Kraft-Wärme-Kopplungen (KWK), Biomassekessel und solarthermische Absorber-Anlagen. Bei Pufferspeichern kommt zusätzlich zur Rücklauftemperatur dem Aufbau einer Schichtung großer Einfluss auf die Fähigkeit des Puffers zu, Wärme nutzbar zu speichern. Die Erreichung beider Ziele kann mittels der bereits bekannten Verfahren und Vorrichtungen zur Rücklaufnutzung und zum Einsatz des Zwei-Zonen-Prinzips deutlich unterstützt und verbessert werden. Bei der Rücklaufnutzung wird der Rücklauf eines oder mehrerer Heizkreise für einen oder mehrere nachfolgende Heizkreise genutzt, z.B. als eine von mehreren möglichen Quellen für den Vorlauf eines nachfolgenden Heizkreises. Dies ist zum Beispiel aus der DE 198 21 256, der DE 102 45 571 und der DE 102 45 572 bekannt.

Bei der Verwendung mehrerer an einem Mehrkammerverteiler angeschlossener Heizkreise werden diese für die Rücklaufnutzung in Hinblick auf ihren Temperaturbedarf mit einem Temperaturgefälle in Richtung zum Wärmeerzeuger angeordnet. Das heißt, der Temperaturbedarf eines Heizkreises, der im Verlauf des Rücklaufs dem Wärmeerzeuger oder den Wärmeerzeugern näher liegt als ein anderer Mischerkreis, ist höchsten so hoch oder aber niedriger als der des anderen Mischerkreises. Die Reihenfolge der Anordnung kann durch die Auslegungstemperaturen der beteiligten Heizkreise festgelegt werden. Dabei ist zunächst die Vorlauftemperatur gemäß Auslegungstemperatur maßgeblich. Bei gleichen Vorlauftemperaturen ist die jeweilige Rücklauftemperatur maßgeblich. Eine derartige Anordnung von mehreren Heizkreisen in der Rücklaufnutzung ist aus PCT/DE2010/075017 bekannt, deren Offenbarungsgehalt in vollem Umfange hier einbezogen wird.

Durch die Rücklaufnutzung sinken die Rücklauftemperatur und der Durchfluss zum Wärmeerzeuger, was mit einem Anstieg der Vorlauf-Rücklauf-Temperaturdifferenz (ΔT) verbunden ist.

Bei der Zwei-Zonen-Entladung nach dem Zwei-Zonen-Prinzip wird einem Puffer zunächst über seinen mittleren von drei Anschlüssen Wärme auf niedrigem Temperaturniveau entzogen, bevor auf den darüber liegenden heißeren Anschlussteil zugegriffen wird. Der Puffer wird unten schneller kalt und bleibt oben länger heiß, was den Nutzen der gespeicherten Wärmemenge erhöht (siehe z.B. WO 2009/074145). Umgekehrt kann dieses Verfahren zur Zwei-Zonen-Beladung von Pufferspeichern eingesetzt werden, wenn der Wärmeerzeuger eine geregelte Rücklauftemperatur benötigt, wie bspw. Holzkessel und Block-Heiz-Kraft-Werke (BHKW). Dabei wird zunächst die obere Zone mit heißem Wasser gefüllt, die dadurch schneller heiß wird, während die untere Zone länger kalt bleibt. Zur Regelung der Rücklauftemperatur wird die Rücklaufanhebung (RLA) eingesetzt.

Der Erfindung liegt die Aufgabe zu Grunde, bei Einsatz einer Systemtrennung die Übertragung von Wärme bzw. Kälte deutlich zu verbessern und möglichst Effizienz schonend in die genannten Verfahren "Rücklaufnutzung" und "Zwei-Zonen-Prinzip" zu integrieren.

Diese Aufgabe wird durch die kennzeichnenden Merkmale der unabhängigen Ansprüche gelöst. Beispielhafte Ausführungsformen der Erfindung sind in den Unteransprüchen definiert.

Zentraler Punkt der Erfindung ist eine als Anlagenteileinheit bezeichnete Gruppe aus einem als Systemtrennung eingesetzten Wärmetauscher, einer Mischeinrichtung, mit der zwei unterschiedlich temperierte Fluidströme dem Wärmetauscher zugeführt werden, und einer Pumpe mit einem kleinen Differenzdruck, die in einem zwischen Mischeinrichtung und Wärmetauscher vorgesehenen unverzweigten Eingangsstrang oder in einem unverzweigt vom Wärmetauscher zu einem Vorlauf oder Rücklauf einer Wärme-/Kältequelle oder -senke verlaufenden Ausgangsstrang angeordnet ist. Diese Pumpe erlaubt gegenüber dem ohne diese Pumpe arbeitenden Stand der Technik deutlich mehr Möglichkeiten, in die Gesamtanlage weitere Komponenten, insbesondere weitere Heiz-/Kühlkreise, insbesondere solche mit Beimischung ihres eigenen Rücklaufs, vorzusehen.

Für die Pumpe ist eine geringe Förderhöhe von vorzugsweise 100 mbar bis 200 mbar vorgesehen.

Beim erfindungsgemäßen Verfahren wird
a) mittels eines Wärme-/Kältetauschers eine Systemtrennung eingesetzt,
b) der Wärme-/Kältetauscher über eine einen Ausgang und zwei Eingänge aufweisende Mischeinrichtung mit Heiz-/Kühlfluid versorgt, wobei zwischen dem Ausgang der Mischeinrichtung und dem Eingang des Wärme-/Kältetauscher ein Eingangsstrang angeordnet,
c) über einen mischerseitigen unverzweigten Ausgangsstrang des Wärme-/Kältetauschers das Heiz-/Kühlfluid dem Vor- oder Rücklauf einer Wärme-/Kältequelle und/oder einer Wärme-/Kältesenke zugeführt und
d) im unverzweigten Eingangsstrang oder im unverzweigten Ausgangsstrang das Heiz-/Kühlfluid aktiv angetrieben.

Das erfindungsgemäße Verfahren wird dabei so ausgeführt, dass dem Wärme-Kältetauscher entweder über einen ersten der beiden Eingänge allein ein aus einer ersten Quelle stammender ersten Heiz-/Kühlfluidstrom einer ersten Temperatur oder über beide Eingänge eine Mischung des Heiz-/Kühlfluidstroms der ersten Quelle mit einem anders temperierten zweiten Heiz-/Kühlfluidstrom einer zweiten Quelle oder über den zweiten Eingang allein der zweite Heiz-/Kühlfluidstrom zugeführt wird, wobei der zweite Heiz-/Kühlfluidstrom im Falle der Heizung niedriger, im Falle der Kühlung höher temperiert ist und der zweite Eingang bei Bedarf bei geschlossenem ersten Eingang gedrosselt wird.

Das erfindungsgemäße Verfahren kann auch so ausgeführt werden, dass ein Niedertemperaturheiz-/Hochtemperaturkühlkreislauf über den Wärmetauscher der Systemtrennung mit Wärme/Kälte versorgt wird, wobei der Mischeinrichtung als erster Heiz-/Kühlfluidstrom der Vorlauf eines ersten Hochtemperaturheiz-/Niedertemperaturkühlkreislaufs und als zweiter Heiz-/Kühlfluidstrom der Rücklauf des ersten Hochtemperaturheiz-/Niedertemperaturkühlkreislaufs zugeführt wird.

Das erfindungsgemäße Verfahren kann auch so ausgeführt werden, dass als zweite Quelle ein Anschluss eines Pufferspeichers und als erste Quelle der Vorlauf eines als Spitzenlastversorgers eingesetzten Wärme-/Kälteerzeugers verwendet wird, wobei der Ausgangsstrang des Wärmetauschers im Falle des Heizung im untersten, im Falle der Kühlung im obersten Anschluss des Pufferspeichers mündet.

Das gemäß dem letzten vorstehenden Absatz gegebene Verfahren kann so weitergebildet werden, dass vom als Spitzenlastversorger für den Pufferspeicher eingesetzten Wärme-/Kälteerzeuger zusätzlich ein Hochtemperaturheiz-/Niedertemperaturkühlkreislauf mit Vorlauffluid versorgt wird, wobei der Rücklauf des Hochtemperaturheiz-/Niedertemperaturkühlkreislaufs einer zwischen dem mittleren Eingang der Mischeinrichtung und dem im Falle der Heizung zweituntersten, im Falle der Kühlung zweitobersten Anschluss des Pufferspeichers vorgesehenen Ausgleichsstrecke zugeführt wird.

Das erfindungsgemäße Verfahren kann auch so ausgeführt werden, dass mehrere Heiz-/Kühlkreise über einen Zweikammerverteiler oder einen Dreikammerverteiler mit Heiz-/Kühlfluid versorgt werden.

Das gemäß dem letzten vorstehenden Absatz gegebene Verfahren kann auch so ausgeführt werden, dass der Zweikammerverteiler oder der Dreikammerverteiler über den Wärmetauscher der Systemtrennung hydraulisch von der restlichen Heizungs- oder Kühlungsanlage abgekoppelt wird.

Das erfindungsgemäße Verfahren kann auch so ausgeführt werden, dass eine Wärmequelle mit vorgegebener Rücklauftemperatur verwendet und an die mischerabgewandte Seite des Wärmetauschers angeschlossen wird.

Schließlich kann das erfindungsgemäße Verfahren auch so ausgeführt werden, dass mehrere Anlagenteile der Heizungs- oder Kühlungsanlage mit jeweils einem Wärmetauscher von der restlichen Heizungs- oder Kühlungsanlage hydraulisch entkoppelt werden.

Im Folgenden sind beispielhafte Ausbildungsformen der erfindungsgemäßen Wärme-/Kälteanlage sowie des erfindungsgemäßen Verfahrens anhand von Figuren dargestellt.

Es zeigt:
- Fig. 1:: schematisch einen Wärmetauscher zur Darstellung der prinzipiellen Zusammenhänge zwischen den Temperaturen und den Durchflussmengen von Heizfluid,
- Fig. 2:: ein bekanntes 3/2-Wege-Ventil
- Fig. 3:: das Steuerverhalten des Eingangs E₁,
- Fig. 4:: das Steuerverhalten des Eingangs E₂,
- Fig. 5:: das Steuerverhalten des Eingangs E₃,
- Fig. 6:: ein 2/2-Wege-Ventil
- Fig. 7:: eine Heizungsanlage mit Heizkessel, Hochtemperaturheizkreis sowie über Systemtrennung angeschlossenem Niedertemperaturkreis,
- Fig. 8:: eine Heizungsanlage ähnlich der in Fig. 7 mit veränderter Position der hydraulischen Pumpen sowie einem Wandgerät als Wärmeerzeuger,
- Fig. 9:: eine Heizungsanlage mit Wärmeerzeuger, Pufferspeicher, Hochtemperaturheizkreis sowie über Systemtrennung angeschlossenem Niedertemperaturkreis,
- Fig. 10:: eine Heizungsanlage mit Wärmeerzeuger, Pufferspeicher, Heizkessel für die Spitzenlast sowie über Systemtrennung angeschlossenem Niedertemperaturkreis,
- Fig. 11:: eine Heizungsanlage mit regenerativem Wärmeerzeuger, Pufferspeicher, Wandgerät für die Spitzenlast, Hochtemperaturheizkreis sowie über Systemtrennung angeschlossenem Niedertemperaturkreis,
- Fig. 12:: eine Heizungsanlage mit regenerativem Wärmeerzeuger, Pufferspeicher, Heizkessel für die Spitzenlast, gemischtem Hochtemperaturheizkreis sowie über Systemtrennung angeschlossenem Niedertemperaturkreis,
- Fig. 13:: Teil einer Heizungsanlage mit an einem Zweikammerverteiler angeschlossenem Niedertemperaturkreis mit Systemtrennung,
- Fig. 14:: Teil einer Heizungsanlage mit an einem Dreikammerverteiler angeschlossenem Niedertemperaturkreis mit Systemtrennung,
- Fig. 15:: Teil einer Heizungsanlage mit an einem Zweikammerverteiler angeschlossenem ersten Niedertemperaturkreis mit Systemtrennung und an einem Dreikammerverteiler angeschlossenem zweiten Niedertemperaturkreis mit Systemtrennung,
- Fig. 16:: eine Heizungsanlage mit Holzkessel, Pufferspeicher mit Warmwasserbereitung, sowie Mischergruppe zur Rücklaufanhebung,
- Fig. 17:: eine Heizungsanlage mit regenerativem Wärmeerzeuger, zusätzlichem Holzkessel mit Mischergruppe zur Rücklaufanhebung, und mehrere an einem Zweikammerverteiler angeschlossenen Heizkreisen.

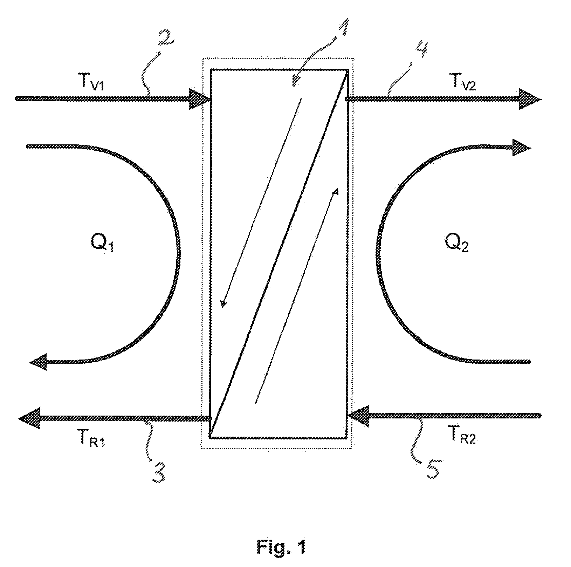

Fig. 1 zeigt schematisch und zur Einführung von der Erfindung zugrunde liegender prinzipieller Überlegungen einen aus dem Stand der Technik bekannten Wärmetauscher 1 mit einem primärseitigen Vorlaufanschluss 2 und einem primärseitigen Rücklaufanschluss 3 sowie einem sekundärseitigen Vorlaufanschluss 4 und einem sekundärseitigen Rücklaufanschluss 5. Die Wärme wird von der Primärseite zur Sekundärseite im Gegenstromverfahren übertragen; Isolationsverluste werden nicht betrachtet. Auf der Primärseite tritt ein Durchfluss der Größe Q1 mit der Vorlauftemperatur TV1 ein und mit der Rücklauftemperatur TR1 wieder heraus. Auf der Sekundärseite tritt ein Durchfluss der Größe Q2 mit der Rücklauftemperatur TR2 ein und mit der Vorlauftemperatur TV2 wieder heraus. Zur Vereinfachung der Darstellung wird auf beiden Seiten das gleiche Fluid vorausgesetzt. Verschiedene Fluide haben zwar verschiedene Wärmekapazitäten, aber dies berührt die hier dargestellte prinzipielle Betrachtung nicht. Zunächst ist offensichtlich, dass TV1 nicht kleiner als TV2 und TR1 nicht kleiner als TR2 sein können. Darüber hinaus gilt wegen der als perfekt vorausgesetzten Isolation, dass die gesamte vom Primärkreis abgegebene Wärmemenge vom Sekundärkreis aufgenommen werden muss, also Q1x(TV1-TR1) = Q2×(TV2-TR2). Also verhalten sich die Volumenstromverhältnisse umgekehrt proportional zu den Δ-T: Q1/Q2 = (TV2-TR2)/(TV1-TR1). Daraus ergeben sich folgende Konsequenzen:
1) Wird bei der Übertragung der Wärme von der Primär- zur Sekundärseite eine möglichst geringe Rücklauftemperaturanhebung TR1-TR2 gewünscht, so muss der primärseitige Durchfluss möglichst klein im Verhältnis zum sekundärseitigen Durchfluss sein.
2) Wird bei der Übertragung der Wärme von der Primär- zur Sekundärseite eine möglichst geringe Vorlauftemperaturabsenkung TV1-TV2 gewünscht, so muss der primärseitige Durchfluss möglichst groß im Verhältnis zum sekundärseitigen Durchfluss sein.

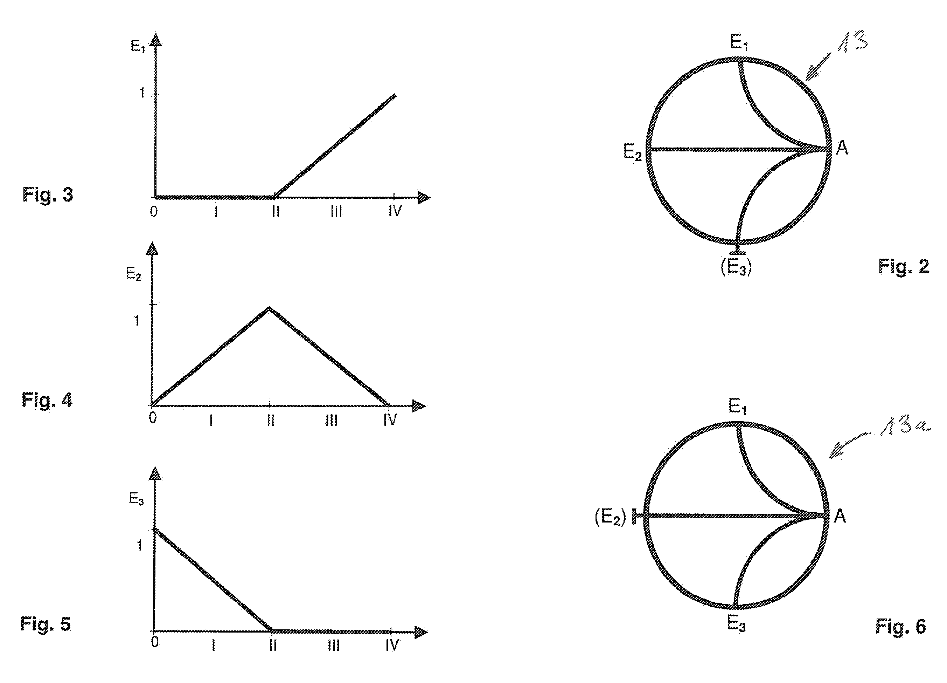

Fig. 2 zeigt symbolisch ein aus dem Stand der Technik bekanntes 3/2-Wege-Ventil 13 mit zwei nutzbaren Eingängen E₁ und E₂, einem Ausgang A und einem dauerhaft extern, z.B. durch einen Stopfen, verschlossenen Eingang E₃. Die Bezeichnung "3/2-Wege-Ventil" leitet sich daraus ab, dass es sich bei dem hier betroffenen Ventil der Funktion nach um eine Kombination aus einem 3-Wege-Mischventil und einem 2-Wege-Mischventil handelt, wie im Folgenden erläutert wird. Bei geöffnetem Eingang E₃ ist das Ventil zwar ein 4-Wege-Mischventil mit drei Eingängen und einem Ausgang. Mit dem geschlossenen Eingang E₃ jedoch bilden die Eingänge E₁ und E₂ zusammen mit dem Ausgang A zunächst ein 3-Wege-Mischventil.

Ist der Eingang E₂ des 3/2-Wege-Ventils 13 aufgrund der Stellung eines nicht gesondert dargestellten, durch Dreh- oder Hubbewegung verstellbaren Stellkörpers intern (das heißt "nicht extern" durch einen Stopfen oder dergleichen) geschlossen und der Eingang E₁ geöffnet, ist eine bestimmte Durchflussmenge möglich. Bei Öffnen des Eingangs E₂ mittels Bewegung des Stellkörpers beginnt Eingang E₁ zu schließen, die Ströme aus den beiden Eingängen werden gemischt. Die mögliche Gesamtdurchflussmenge ändert sich hierdurch nicht wesentlich. In diesem Bereich fungiert das 3/2-Wege-Ventil wie ein 3-Wege-Mischventil. Die Mischfunktion ist jedoch nur solange gegeben, wie die Eingänge E₁ und E₂ zum Teil geöffnet sind. Sobald Eingang E₁ durch die weitere Verstellung des Stellkörpers geschlossen ist, fließt das Heizmedium allein durch E₂. Die weitere Verstellung des Stellkörpers führt dann lediglich zu einer Drosselung des Volumenstroms, da der folgende Eingang E₃ dauerhaft von außen verschlossen ist. In diesem Drossel-Bereich fungiert das 3/2-Wege-Ventil 13 also als 2-Wege-Drosselventil. Der Stellbereich des Stellkörpers ist durch zwei Endpunkte "0" und "IV" begrenzt sowie durch einen mittleren Betriebspunkt "II" in die beiden Stellbereiche "I" und "III" unterteilt. Folgende Tab. 1 zeigt die verschiedenen Betriebszustände, wobei die Ausdrücke "schließen" und "öffnen" von der Bewegungsrichtung des Stellkörpers abhängen:

**Tab. 1**

| Betriebszustand | Verhältnis zum Ausgang |
|---|---|
| Endpunkt IV | E1 offen, E2 geschlossen |
| Oberer Stellbereich III | E1 schließt, E2 öffnet / E1 öffnet, E2 schließt |
| mittl. Betriebspunkt II | E1 geschlossen, E2 offen |
| Unterer Stellbereich I | E1 geschlossen, E2 schließt / öffnet |
| Endpunkt 0 | E1 geschlossen, E2 geschlossen |

Dieses Steuerverhalten ist in Fig. 3 und Fig. 4 dargestellt. Fig. 5 zeigt das Steuerverhalten in Bezug auf Eingang E₃, wenn dieser nicht von außen verschlossen wäre.

Anstelle des 3/2-Wege-Ventils gemäß Fig. 2 kann z.B. in später dargestellten Ausbildungsbeispielen der erfindungsgemäßen Heizungsanlagen bzw. in den entsprechenden erfindungsgemäßen Verfahren eine Kombination eines 2-Wege-Drosselventils mit einem 3-Wege-Mischventil eingesetzt werden, indem vor dem Eingang E₂ des 3-Wege-Mischventils das 2-Wege-Drosselventil geschaltet wird. Um die gleiche Wirkung zu erhalten wie beim 3/2-Wege-Ventil müsste mit dem Schließen des Drosselventils begonnen werden, wenn der Eingang E₂ vollständig geöffnet ist. In der anderen Richtung müsste das 2-Wege-Drosselventil erst vollständig geöffnet werden, bevor mit dem Schließen des Eingangs E₂ des 3-Wege-Mischventils begonnen wird. Die Steuerung beider Ventile kann dann so zusammengeschaltet werden, dass letztendlich ein Steuerbefehl für beide Ventile ausreicht.

Das 3/2-Wege-Ventil 13 gemäß Fig. 2 ist aus der DE 198 21 256 C1 bekannt, deren Offenbarungsgehalt im vollen Umfang einbezogen wird.

Anstelle des äußeren Eingangs E₃ kann auch der Eingang E₁ extern verschlossen werden.

Fig. 6 zeigt ein 2/2-Wege-Ventil 13a mit folgenden Betriebszuständen gemäß Tab. 2 und den Fig. 3 und 5, indem E2 statt E3 permanent verschlossen wird:

**Tab. 2**

| Betriebszustand | Verhältnis zum Ausgang |
|---|---|
| Endpunkt IV | E1 offen, E3 geschlossen |
| Oberer Stellbereich III | E1 schließt / öffnet, E3 geschlossen |
| mittl. Betriebspunkt II | E1 geschlossen, E3 geschlossen |
| Unterer Stellbereich I | E1 geschlossen, E3 öffnet /schließt |
| Endpunkt 0 | E1 geschlossen, E3 offen |

Mit diesem Ventil findet also keine Mischung von durch zwei unterschiedliche Eingänge eintretenden Fluidströmen statt. Diese Variante ist somit nicht Gegenstand der Erfindung.

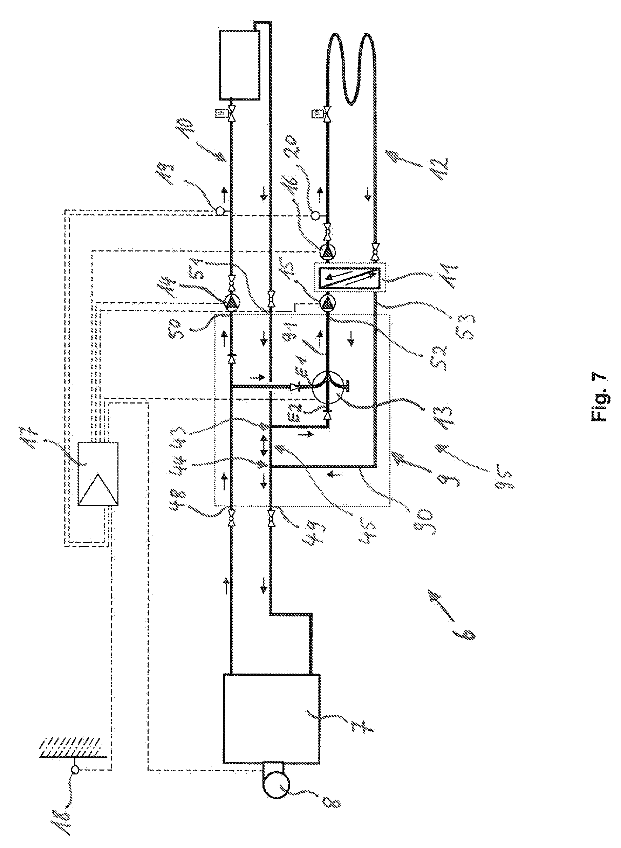

Fig. 7 zeigt nun eine Heizungsanlage 6 mit einem Heizkessel 7, einem Brenner 8, einer erfindungsgemäßen Rücklaufnutzungs-Mischergruppe 9, einem ungeregelten Hochtemperaturkreis 10 - hier als Radiatorenkreis dargestellt - und einem über eine Systemtrennung 11 geregelt versorgten Niedertemperaturkreis 12 - hier als Fußbodenkreis dargestellt. Die Rücklaufnutzungs-Mischergruppe 9 ist über einen ersten Anschluss 48 mit dem Vorlauf der Wärmequelle 7, einem zweiten Anschluss 49 mit dem Rücklauf der Wärmequelle 7, einem dritten Anschluss 50 mit dem Vorlauf des ungeregelten Hochtemperaturkreises 10, einem vierten Anschluss 51 mit dem Rücklauf des ungeregelten Hochtemperaturkreises 10, einem fünften Anschluss 52 und einem sechsten Anschluss 53 mit Eingang bzw. Ausgang eines Wärmetauschers 11 verbunden, der für einen Niedertemperaturkreis 12 als Systemtrennung dient und über den der Niedertemperaturkreis 12 geregelt versorgt wird. Eine Umwälzpumpe 15 ist in einem unverzweigten Eingangsstrang 91 des Wärmetauschers 11 angeordnet. Alternativ könnte die Umwälzpumpe 15 auch in einem zwischen Wärmetauscher 11 und dem Rücklauf des Wärmeerzeugers angeordneten unverzweigten Ausgangsstrang 90 vorgesehen werden. Zentraler Punkt der Mischergruppe 9 ist ein 3/2-Wege-Ventil 13, wie es in Fig.2 dargestellt ist. Das 3/2-Wegeventil 13, der Wärmetauscher 11 und die Umwälzpumpe 15 bilden zusammen mit dem Ausgangsstrang 90 und dem Eingangsstrang 91 des Wärmetauschers 11 eine Anlagenteileinheit 95, wie sie in den verschiedenen Ausführungsformen der erfindungsgemäßen Anlage immer auftaucht, in einigen Varianten auch mehrfach.

Der Brenner 8, der hier nicht dargestellte Antrieb des 3/2-Wege-Ventils 13 und eine Umwälzpumpe 14 des Hochtemperaturkreises 10, die primärseitige Umwälzpumpe 15 der Systemtrennung 11 sowie eine sekundärseitige Umwälzpumpe 16 des Niedertemperaturkreises 12 sind ebenso über hier gestrichelt dargestellte Leitungen mit einem herkömmlichen Regler 17 verbunden, wie ein Außenfühler 18, ein Vorlauffühler 19 des Hochtemperaturkreises 10 und ein Vorlauffühler 20 des Niedertemperaturkreises 12. Aus der Außentemperatur berechnet der witterungsgeführte Regler 17 über eine Heizkurve je Heizkreis den jeweiligen Sollwert der Vorlauftemperatur. Aus dem Vergleich mit dem gemessenen Istwert folgt dann der Steuerbefehl für den Brenner 8 und den Stellantrieb des 3/2-Wege-Ventils 13, hier mittels Dreipunktsignal ohne Rückmeldung, sowie für die Umwälzpumpen 14, 15 und 16. Die Umwälzpumpe 14 versorgt den Hochtemperaturkreis 10 direkt mit Kesselvorlaufwasser, während der Niedertemperaturkreis 12 durch die sekundärseitige Umwälzpumpe 16 aus der Systemtrennung 11 versorgt wird.

Die primärseitige Umwälzpumpe 15 versorgt die Systemtrennung je nach Stellung des 3/2-Wege-Ventils 13 entweder mit einer Mischung aus heißem Kesselvorlaufwasser über Eingang E1 und warmem Rücklaufwasser des Hochtemperaturkreises über Eingang E2 (Oberer Stellbereich III) oder mit einem gedrosselten Durchfluss aus dem warmem Rücklaufwasser des Hochtemperaturkreises über Eingang E2 (Unterer Stellbereich I). Dabei wirkt die Regelung wie eine herkömmliche Mischkreisregelung mit Dreipunktsignal auf den Stellantrieb: Ist die Vorlauftemperatur zu hoch, so wird das 3/2-Wege-Ventil 13 geschlossen, der Antrieb bewegt den Stellkörper in Richtung Endpunkt (0); ist die Vorlauftemperatur zu niedrig, so wird das 3/2-Wege-Ventil 13 geöffnet, der Antrieb bewegt den Stellkörper in Richtung Endpunkt (IV). Die Regelung muss dazu nicht wissen, in welchem der beiden Stellbereiche (III oder I) sich das 3/2-Wege-Ventil 13 gerade befindet. Die Entnahme des Heizungswassers aus dem Rücklauf des Hochtemperaturkreises 10 erfolgt an dem stromaufwärtigen Entnahmepunkt 43 und die Rückspeisung des Rücklaufwassers aus der Systemtrennung 11 an dem stromabwärtigen Rückspeisepunkt 44, wobei das Verbindungsstück zwischen beiden Punkten eine Ausgleichsstrecke 45 bildet, die als hydraulische Weiche wirkt und die entnommene Heizungswassermenge vom Durchfluss des ungeregelten Hochtemperaturkreises 10 entkoppelt, weshalb ihr Durchfluss in beide Richtungen (weg vom oder hin zum Wärmeerzeuger 7 gerichtet) weisen und auch Null betragen kann. Insofern kann, wenn der Durchfluss in der Ausgleichsstrecke 45 weg vom Wärmeerzeuger 7 gerichtet ist, die vom stromaufwärtigen Entnahmepunkt 43 über Eingang E2 des 3/2-WegeVentils 13 gezogene Heizungswassermenge bereits aus einer Vormischung von warmem Rücklauf des Hochtemperaturkreises 10 und kaltem Rücklauf aus der Systemtrennung 11 bestehen, was in der Regel ein Öffnen des 3/2-Wege-Ventils 13 aus dem unteren Stellbereich I in den oberen Stellbereich III zur Folge hat. Die primärseitige Umwälzpumpe 15 der Systemtrennung 11 ist auf eine geringe Förderhöhe von etwa 100-200mbar bzw. 1-2mWS eingestellt und idealerweise mit einem hier nicht dargestellten Differenzdruckregler ausgestattet, der die Förderhöhe über den gesamten Durchflussbereich konstant hält. Differenzdruck-geregelte Pumpen sind aus dem Stand der Technik bekannt und handelsüblich. Auf die hier offenbarte Weise ist es möglich, den Rücklauf des Hochtemperaturkreises zu nutzen und gleichzeitig eine möglichst niedrige primärseitige Rücklauftemperatur aus der Systemtrennung 11 zum Wärmeerzeuger 7 zu erhalten.

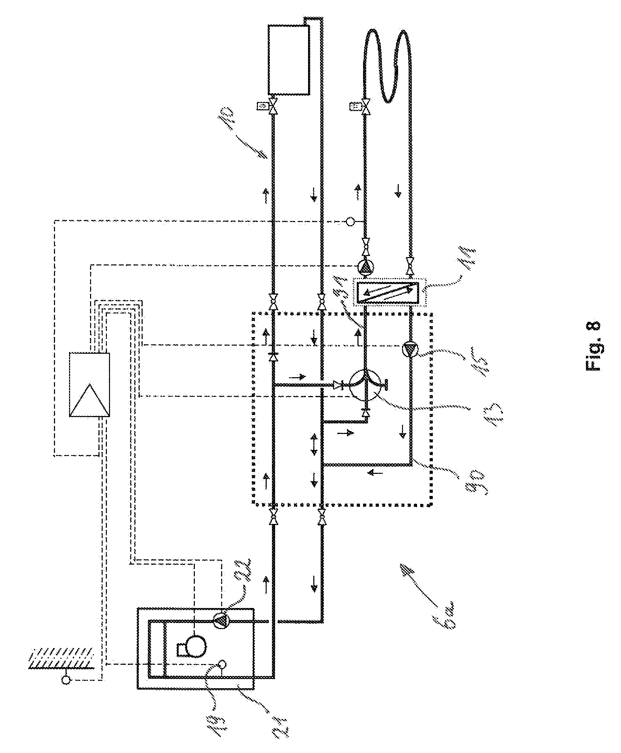

Fig. 8 zeigt eine vergleichsweise Heizungsanlage 6a, wobei der Wärmeerzeuger hier als Wandheizgerät 21 mit eingebautem Vorlauffühler 19 des Hochtemperaturkreises 10 und eingebauter Umwälzpumpe 22 ausgeführt ist. Letztere versorgt den Hochtemperaturkreis 10, so dass sie die Umwälzpumpe 14 des Hochtemperaturkreises nach Fig. 7 ersetzt. In einer weiteren Variation ist hier die primärseitige Umwälzpumpe 15 im Rücklauf der Systemtrennung 11 eingebaut, was keinen Unterschied in der Funktion macht. Alle Wirkungen des Regelkreises entsprechen denen in Fig. 7, weshalb auf die obige Beschreibung verwiesen wird.

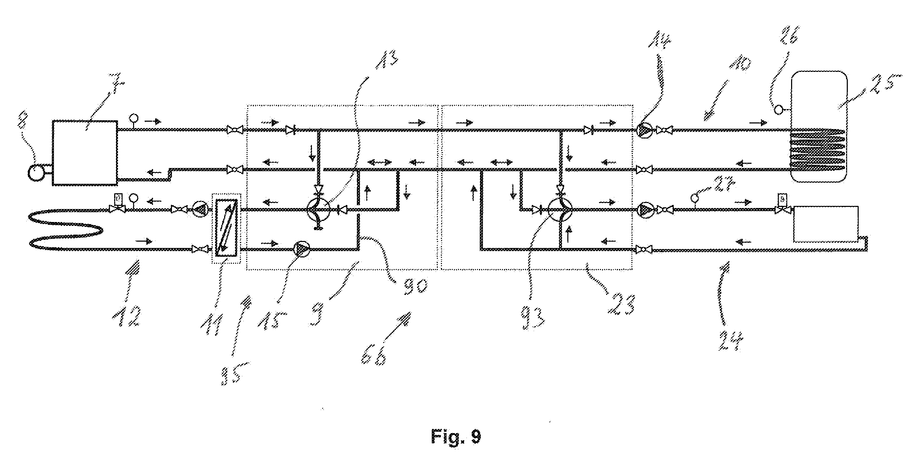

Fig. 9 zeigt eine weitere Heizungsanlage 6b mit einem Heizkessel 7, einem Brenner 8 sowie einem über die Anlagenteileinheit 95 angeschlossenen Niedertemperaturkreis 12. Des Weiteren ist wie in Fig. 7 ein Hochtemperaturkreis 10, hier als Warmwasserbereitung 25, vorgesehen. Zusätzlich zu der Ausführungsform nach Fig. 7 ist in Fig. 9 ein weiterer Hochtemperaturkreis 24, hier als Radiatorenkreis, angeschlossen und zwar über eine bekannte Rücklaufnutzungs-Mischergruppe 23 mit einer bekannten Mischeinrichtung 93, mit der der etwas niedriger temperierte Radiatorenkreis 24 vom Vorlauf und oder vom Rücklauf des Warmwasserkreises 10 versorgt wird. Die bekannte Mischeinrichtung 93 erlaubt zudem im Radiatorenkreis 24 die Beimischung des eigenen Rücklaufs. Die witterungsgeführte Regelung steuert den Brenner 8 des Heizkessels 7 nach dem Maximum der geforderten Vorlauftemperaturen (Trinkwarmwasserspeicher 25, Radiatorenkreis 24 und Fußbodenkreis 12). Eine Rücklaufnutzung wie in der Baugruppe 23 dargestellt einschließlich der Mischeinrichtung 93 ist aus der DE 198 21 256 C1 bekannt, deren Offenbarungsgehalt hier vollständig einbezogen wird. Die Mischeinrichtung 93 entspricht im Aufbau dem der Mischeinrichtung 13 der erfindungsgemäßen Anlagenteileinheit 95 mit dem Unterschied, dass in der Mischeinrichtung 93 des Radiatorenkreises 24 sämtliche Eingänge für Fluidströme zugänglich, also nicht extern verschlossen sind.

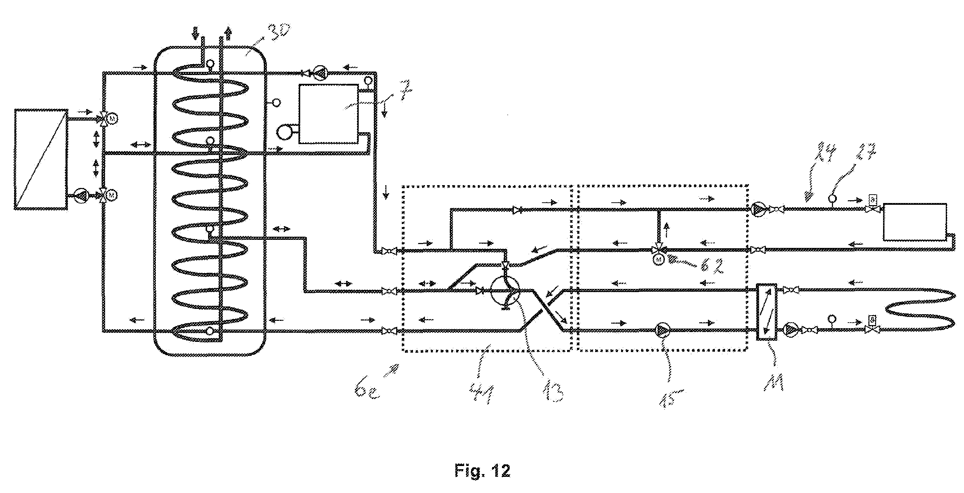

Die Umwälzpumpe 14 des ungeregelten Hochtemperaturkreises 10 übernimmt die Funktion der Trinkwarmwasser-Ladepumpe, die beim Unter/Überschreiten der Solltemperatur am Trinkwarmwasser-Speicherfühler 26 durch den hier nicht dargestellten Regler (siehe Bezugszeichen 17 in Fig. 7 und 8) mittels Zwei-Punkt-Signal ein/ausgeschaltet wird. Der geregelte Hochtemperaturkreis 24 wird durch Soll/IstVergleich nach dem Vorlauffühler 27 des geregelten Hochtemperaturkreises 24 mittels Dreipunkt-Signal ohne Rückmeldung über den hier nicht dargestellten Stellantrieb der herkömmlichen Rücklaufnutzungs-Mischergruppe 23 gesteuert und bevorzugt aus dem Rücklauf des ungeregelten Hochtemperaturkreises 10 versorgt. Der Rücklauf des geregelten Hochtemperaturkreises 24 wiederum wird in der bereits beschriebenen Weise von der vorgeschalteten erfindungsgemäßen Rücklaufnutzungs-Mischergruppe 9 zur Versorgung der Systemtrennung 11 des geregelten Niedertemperaturkreises 12 genutzt. Hierbei ist insbesondere festzuhalten, dass erfindungsgemäße Rücklaufnutzungs-Mischergruppen 9 in beliebiger Anzahl und Reihenfolge mit herkömmlichen Mischergruppen sowohl mit Rücklaufnutzung (siehe 23 in Fig. 9) als auch ohne Rücklaufnutzung (siehe Fig. 12) kombinierbar sind.

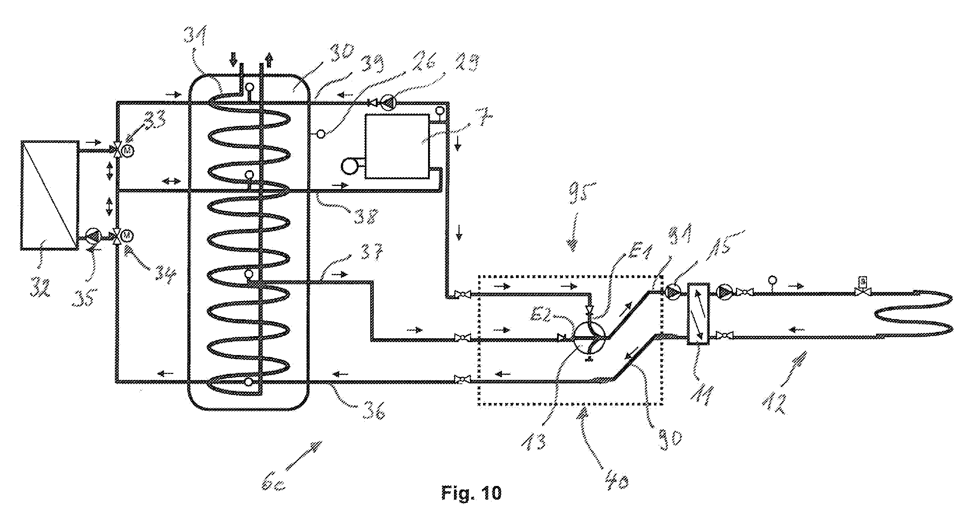

Fig. 10 zeigt eine Heizungsanlage 6c mit einem druckfesten Pufferspeicher 30, hier bspw. mit einem im Puffer integrierten Trinkwarmwasserbereiter 31 dargestellt. Der Puffer 30 besitzt vier Anschlüsse 36, 37, 38 und 39, die den Puffer in drei Zonen unterteilen. Die oberste Zone befindet sich zwischen dem obersten Anschluss 39 des Pufferspeichers 30 und dem dritt-untersten Anschluss 38 des Pufferspeichers 30 und enthält die Wärmemenge mit dem höchsten Temperaturniveau zur Trinkwarmwasserbereitung (Heißzone). Dabei ist es für die Erfindung bedeutungslos, ob die im Puffer integriert dargestellte Trinkwarmwasserbereitung 31 nach dem Durchflussprinzip (bspw. Edelstahlwellrohr) oder dem Speicherprinzip (Trinkwarmwasserspeicher im Pufferspeicher) erfolgt. Ebenso kann die Trinkwarmwasserbereitung extern sowohl nach dem Durchflussprinzip (Frischwasserstation) als auch nach dem Speicherprinzip (externer Trinkwarmwasserspeicher) erfolgen oder auch ganz entfallen. Dann entfiele die oberste Zone und der Puffer 30 bestünde nur noch aus zwei Zonen mit drei Anschlüssen; der dritt-unterste Anschluss 38 des Pufferspeichers 30 fiele mit dem obersten Anschluss 39 des Pufferspeichers 30 zusammen.

Links vom druckfesten Pufferspeicher 30 ist der Wärmetauscher 32 einer hier nicht dargestellten regenerativen Wärmequelle dargestellt. Regenerative Wärmequellen wie bspw. Solaranlagen oder Wärmepumpen besitzen meist eine geringere Steuerbarkeit und Leistungsfähigkeit als herkömmliche Wärmeerzeuger, so dass ihre Wärme bevorzugt im Puffer 30 gespeichert wird. Die von ihr erzeugte Wärme wird je nach Angebot und Bedarf über Umschaltventile 33/34 im Vorlauf und Rücklauf auf dem optimalen Temperaturniveau mittels der Umwälzladepumpe 35 des Schichtlademoduls eingespeist. Für den Fall einer Angebotsunterdeckung steht optional ein Heizkessel 7 als sog. Spitzenlastwärmeerzeuger bereit.

Eine erfindungsgemäße Anlagenteileinheit 95 versorgt wiederum einen Niedertemperaturkreis 12 und ist mit seinem Ausgang und seinen Eingängen am Pufferspeicher 30 sowie am Heizkessel 7 angeschlossen.

Unterschreitet die am Puffer- oder Trinkwasserspeicher 30 vom Trinkwarmwasser-Speicherfühler 26 gemessene Temperatur den eingestellten Sollwert, so wird die oberste Zone des Puffers über eine Trinkwarmwasser-Ladepumpe 29 und den Spitzenlastkessel 7 aufgeheizt. Die beiden darunterliegenden Zonen des Puffers 30 sind für Heizwärme bestimmt. Die mittlere Zone zwischen dem zweit-untersten Anschluss 37 und dem dritt-untersten Anschluss 38 des Pufferspeichers 30 ist für die Hochtemperatur-Heizwärme reserviert (Warmzone) und die unterste Zone zwischen dem zweit-untersten Anschluss 37 und dem untersten Anschluss 36 des Pufferspeichers für die Niedertemperatur-Heizwärme (Kaltzone).

Ziel der Wärmezufuhr ist es, zunächst möglichst schnell die Heißzone mit regenerativ gewonnener Wärme zu beladen, um ein Anspringen des Spitzenlastkessels 7 zu vermeiden. Ziel der Wärmeentnahme ist es hingegen, zunächst so schnell wie möglich die Kaltzone so tief wie möglich abzukühlen und nur so wenig wie möglich Wärme aus der Warmzone zu entnehmen. Dabei ist es beabsichtigt, dass die Wärme in der Heißzone nicht zu Heizzwecken entnommen werden kann, da sie der Trinkwarmwasserbereitung vorbehalten ist. Eine zur Anlagenteileinheit 95 gehörende Zwei-Zonen-Entladungs-Mischergruppe 40 entnimmt zunächst über den zweit-untersten Anschluss 37 des Pufferspeichers der mittleren Warmzone die Heizwärme und führt sie dem geregelten Heizkreis 12 über die Systemtrennung 11 zu. Hierfür befindet sich das Mischerventil 13 im Stellbereich I oder im mittleren Betriebspunkt II (siehe Tabelle 1). Ist die Vorlauftemperatur des geregelten Heizkreises 12 zu hoch, so schließt der hier nicht dargestellte Regler über den Stellantrieb des 3/2-Wege-Ventils 13 den Eingang E2 (Stellbereich I) und drosselt dadurch den primärseitigen Durchfluss Q1 durch die Systemtrennung, wodurch die sekundärseitige Vorlauftemperatur TV2 sinkt (siehe Fig.1).

Kann die Vorlauftemperatur des geregelten Heizkreises 12 nicht mehr durch Steigerung des primärseitigen Durchfluss Q1 über Eingang E2 aus dem zweit-untersten Anschluss 37 erreicht werden, so öffnet nach einer vorbestimmten Zeit oder nach Überschreiten einer vorbestimmten Soll/Ist-Differenz der hier nicht gezeigte Regler über den Stellantrieb des 3/2-Wege-Ventils 13 den ersten Eingang E1 (Stellbereich III) zum dritt-untersten Anschluss des Pufferspeichers 38 und führt der Systemtrennung 11 damit heißeres Heizungswasser zu. Ist allerdings die Warmzone ebenfalls nicht mehr in der Lage eine genügend hohe Vorlauftemperatur zu liefern, so springt der Spitzenlastkessel 7 im Heizbetrieb ein und ergänzt die fehlende Wärmemenge. Dieser Zustand ist eindeutig am vollständig geöffneten 3/2-Wege-Ventil 13 erkennbar, so dass eine Freigabe des Spitzenlastkessels 7 im Heizbetrieb über einen Endschalter des Stellantriebes des Ventils 13 zweckmäßig erfolgen könnte. Das dargestellte Verfahren und die dargestellte Vorrichtung stellen sicher, dass aus der Systemtrennung 11 stets kältestmögliches Heizungswasser über den untersten Anschluss 36 in den Pufferspeicher 30 zurückfließt und dass der Warmzone erst dann Heizwärme entnommen wird, nachdem der Heizwärmeinhalt der Kaltzone erschöpft ist. Hierbei ist insbesondere festzuhalten, dass die erfindungsgemäße Zwei-Zonen-Entladungs-Mischergruppe 40 auch bei nur einem einzigen Heizkreis und somit ohne Rücklaufnutzung und ohne einen weiteren Hochtemperaturkreis einsetzbar ist.

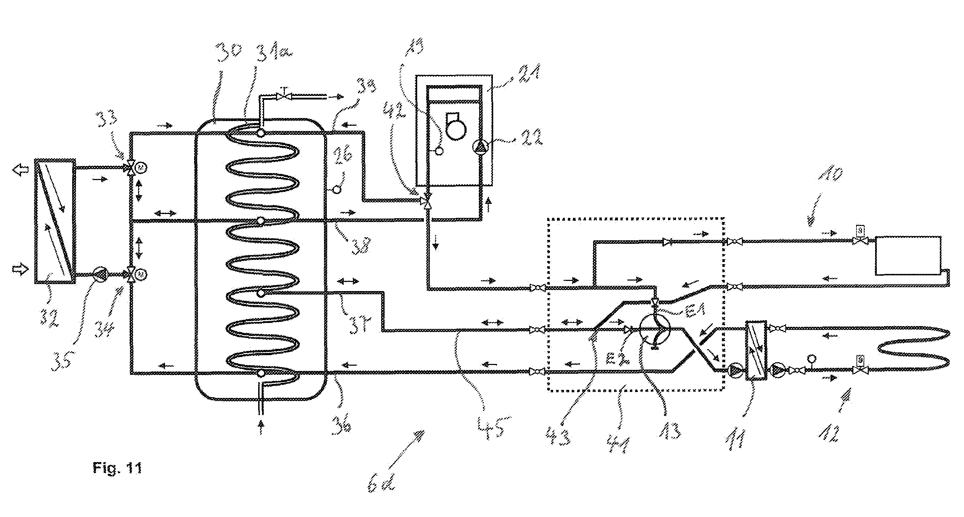

Fig. 11. zeigt eine weitere Heizungsanlage 6d mit einem druckfesten Pufferspeicher 30 mit integrierter Warmwasserbereitung 31a, einem Wärmetauscher 32 für eine hier nicht dargestellte regenerative Wärmequelle, einem am Wärmetauscher 32 angeschlossenen Schichtlademodul bestehend aus einem Vorlauf-Umschaltventil 33 und/oder einem Rücklauf- Umschaltventil 34 und einer Umwälzpumpe 35, einem Spitzenlastwärmeerzeuger als Wandheizgerät 21 mit eingebauter Umwälzpumpe 22 und einer weiteren erfindungsgemäßen Zwei-Zonen-Rücklaufnutzungs-Mischergruppe 41, einem ungeregelten Hochtemperaturkreis 10 - hier als Radiatorenkreis dargestellt - und einem über eine Systemtrennung 11 geregelt versorgten Niedertemperaturkreis 12 - hier als Fußbodenkreis dargestellt. Bei dieser Baugruppe werden die beiden bisher dargestellten Verfahren "Rücklaufnutzung" und "Zwei-Zonen-Entladung" miteinander kombiniert, was in etwa einer Addition beider positiven Effekte auf den Pufferspeicher entspricht.

Die Einspeisung regenerativ gewonnener Wärme und die Trinkwarmwasserbereitung erfolgen analog zu Fig. 10, wobei statt der Trinkwarmwasser-Ladepumpe 29 beispielsweise ein Vorlauf-Umschaltventil 42 im oder am Spitzenlastwandheizgerät 21 eingesetzt wird. Dieses leitet den Vorlauf des Wandheizgerätes 21 in die Heißzone des Pufferspeichers 30, wenn die vom Trinkwarmwasser-Speicherfühler 26 gemessene Temperatur den eingestellten Sollwert unterschreitet. Im Heizbetrieb hingegen befördert die im Wandheizgerät 21 eingebaute Umwälzpumpe 22 dessen Vorlauf über die erfindungsgemäße Zwei-Zonen-Rücklaufnutzungs-Mischergruppe 41 direkt in den Vorlauf des ungeregelten Hochtemperaturkreises 10. Aus dessen Rücklauf gelangt es zum stromaufwärtigen Entnahmepunkt 43.

Somit kann das 3/2-Wege-Ventil 13 der Zwei-Zonen-Rücklaufnutzungs-Mischergruppe 41 die Systemtrennung 11 des geregelten Niedertemperaturkreises 12 in seinem oberen Stellbereich III mit einer Mischung aus heißem Hochtemperaturvorlauf und warmem Hochtemperaturrücklauf versorgen oder aber in seinem unteren Stellbereich I mit einem gedrosselten Durchfluss aus dem warmem Hochtemperaturrücklauf, wobei die Entnahme des Heizungswassers aus dem Rücklauf des Hochtemperaturkreises 10 an dem stromaufwärtigen Entnahmepunkt 43 erfolgt und die Rückspeisung des Rücklaufwassers aus der Systemtrennung 11 direkt über den untersten Anschluss 36 in den Pufferspeicher, so dass das Verbindungsstück zwischen dem stromaufwärtigen Entnahmepunkt 43 und dem zweit-untersten Anschluss 37 des Pufferspeichers die Ausgleichsstrecke 45 bildet, die als hydraulische Weiche wirkt und die entnommene Heizungswassermenge vom Durchfluss des ungeregelten Hochtemperaturkreises 10 entkoppelt, weshalb ihr Durchfluss in beide Richtungen (hin zum oder weg vom Pufferspeicher) weisen und auch Null betragen kann.

Insofern kann, wenn der Durchfluss in der Ausgleichsstrecke 45 aus dem Pufferspeicher heraus gerichtet ist, die vom stromaufwärtigen Entnahmepunkt 43 über Eingang E2 des 3/2-Wege-Ventils 13 gezogene Heizungswassermenge bereits aus einer Vormischung von warmem Rücklauf des Hochtemperaturkreises 10 und warmem Heizungswasser aus dem zweit-untersten Anschluss des Pufferspeichers 37 bestehen. Erst wenn die gewünschte Vorlauftemperatur des geregelten Niedertemperaturkreises 12 nicht mehr erreicht werden kann, öffnet der Regler das 3/2-Wege-Ventil 13 über den Stellantrieb zum heißen Vorlauf an E1 in den oberen Stellbereich III. Auf diese Weise wird im Gegensatz zur reinen Rücklaufnutzungs-Mischergruppe 9 in den Fig. 7, 8 und 9 verhindert, dass sich warmer Überschuss aus dem Rücklauf des Hochtemperaturkreises 10 mit dem kalten Rücklauf aus der Systemtrennung 11 vermischt und so die Kaltzone des Puffers 30 unnötig erwärmt bzw. nicht so stark wie möglich auskühlt (Fließrichtung in der Ausgleichsstrecke 45 in den Pufferspeicher 30 hinein) oder aber dass bei einem Mangel an warmem Rücklaufwasser aus dem Hochtemperaturkreis 10 ein Teil des kalten Rücklaufs aus der Systemtrennung 11 in den Vorlauf der Systemtrennung 11 gefördert wird ohne die Kaltzone des Puffers zu durchströmen und somit zu ihrer Auskühlung beizutragen bzw. ihr Wärme entzogen zu haben (Fließrichtung in der Ausgleichsstrecke 45 aus dem Pufferspeicher heraus). Da jedoch nahezu immer einer der beiden beschriebenen Zustände vorliegt, erschließt die hier offenbarte Kombination der beiden Verfahren "Rücklaufnutzung" und "Zwei-Zonen-Entladung" zur "Zwei-Zonen-Rücklaufnutzung" auch die Summe der Vorteile beider Einzelverfahren.

Fig. 12 zeigt ein weiteres Ausführungsbeispiel einer Heizungsanlage 6e mit einer erfindungsgemäßen Zwei-Zonen-Rücklaufnutzungs-Mischergruppe 41 entsprechend Fig. 11. Allerdings ist hier der optionale Spitzenlastwärmeerzeuger wieder als Heizkessel 7 ausgeführt und der Hochtemperaturkreis 24 geregelt ausgeführt. Dabei entspricht die Wirkungsweise der Wärmeerzeugung der bereits für Fig. 10 beschriebenen, während die Wirkungsweise der Zwei-Zonen-Rücklaufnutzungs-Mischergruppe 41 der Beschreibung zu Fig. 11 entspricht. Die Vorlauftemperatur des Hochtemperaturkreises 24 wird über einen weiteren Mischer 62 unter Zumischung aus seinem eigenen Rücklauf geregelt, der eines eigenen Vorlauffühlers 27 bedarf. Der von ihm gemessene Istwert wird vom hier nicht dargestellten witterungsgeführten herkömmlichen Regler mit dem aus der Außentemperatur über seine eigene Heizkurve ermittelten Sollwert verglichen und mittels Einwirkung eines Dreipunktsignals auf seinen Stellantrieb durch Verstellen des Mischers 62 korrigiert. Dabei ist es für das Wirkprinzip unbedeutend, dass der Mischer 62 hier als Verteilventil dargestellt ist. Entscheidend hingegen ist die Feststellung, dass erfindungsgemäße Zwei-Zonen-Rücklaufnutzungs-Mischergruppen 41 in beliebiger Anzahl und Reihenfolge mit herkömmlichen Mischergruppen sowohl mit (wie zum Beispiel in Fig. 9) als auch ohne Rücklaufnutzung kombinierbar sind, was gemäß dem Stand der Technik nach WO 2009/074145 A2 aus hydraulischen Gründen nicht möglich wäre.

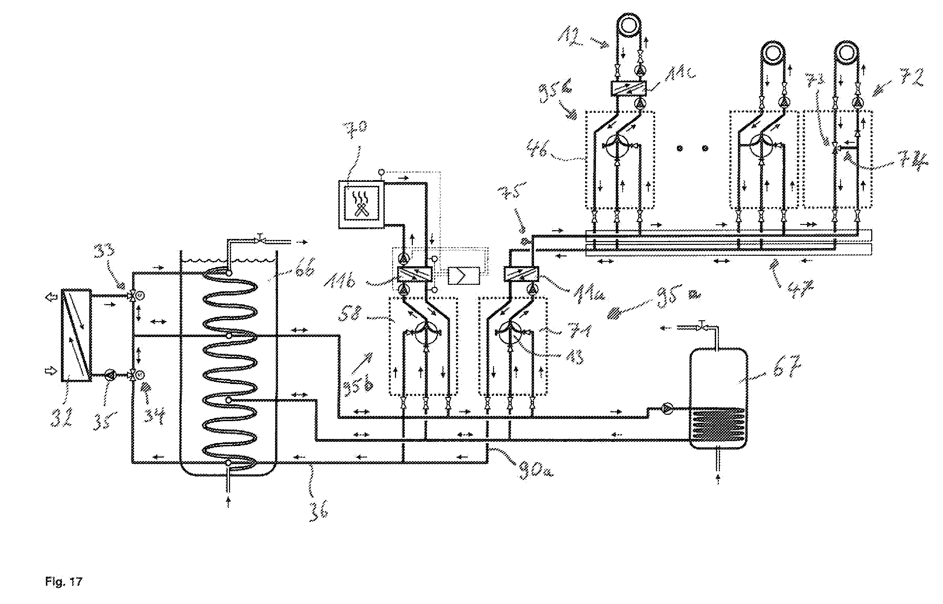

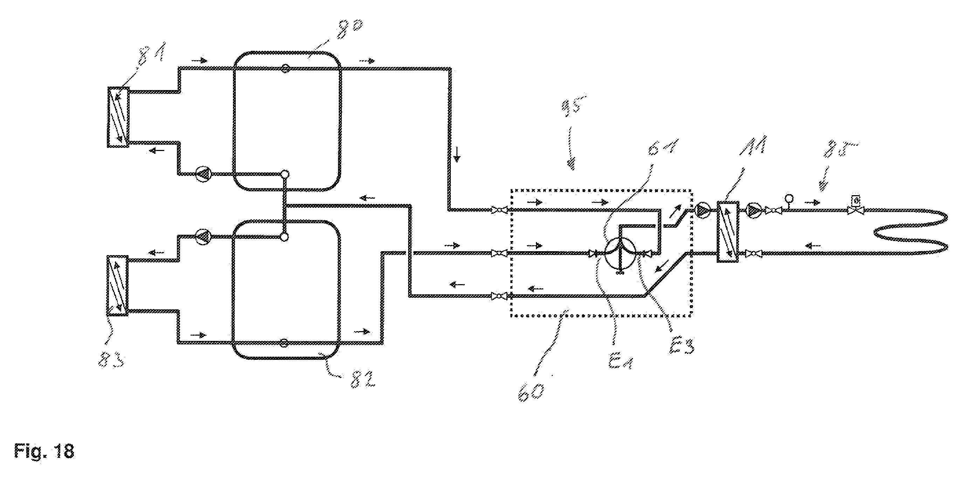

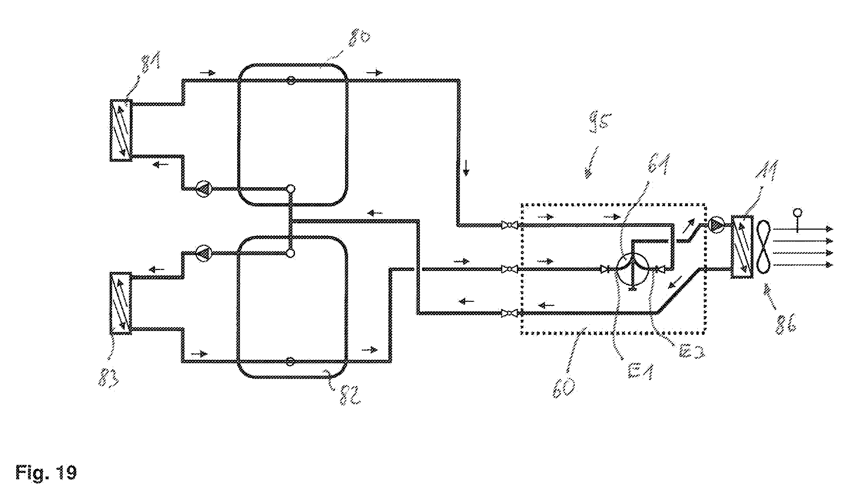

Für eine erfindungsgemäße Heizungs- oder Kühlungsanlage kann ein Zweikammer-Verteiler vorgesehen sein, an dem mindestens zwei Heiz-/Kühlkreisläufe angeschlossen sind. Es kann statt des Zweikammer-Verteilers oder zusätzlich auch ein Dreikammer-Verteiler vorgesehen sein, an dem mindestens zwei Heiz-/Kühlkreisläufe parallel angeschlossen sind, wobei eine der Kammern an einem Pufferspeicher angeschlossen ist. Im Falle eines Zweikammerverteilers, an dem mindestens zwei Heiz-/Kühlkreisläufe angeschlossen sind, oder im Falles eines Dreikammerverteilers, an dem mindestens zwei Heiz-/Kühlkreisläufe parallel angeschlossen sind, wobei eine der Kammern an einem Pufferspeicher angeschlossen ist, kann zumindest einer der Heiz-/Kühlkreise über die Anlagenteileinheit (siehe 95 in Fig. 7) oder eine der Anlagenteileinheiten (siehe z.B. 95a - 95c in Fig. 17) am Zweikammer-Verteiler oder am Dreikammer-Verteiler angeschlossenen sein. In einem der vorgenannten Fälle unter Beteiligung eines Zweikammerverteilers kann der Zweikammer-Verteiler über die Anlagenteileinheit oder eine der Anlageteileinheiten auch mit der restlichen Heizungs-/Kühlungsanlage verbunden sein.

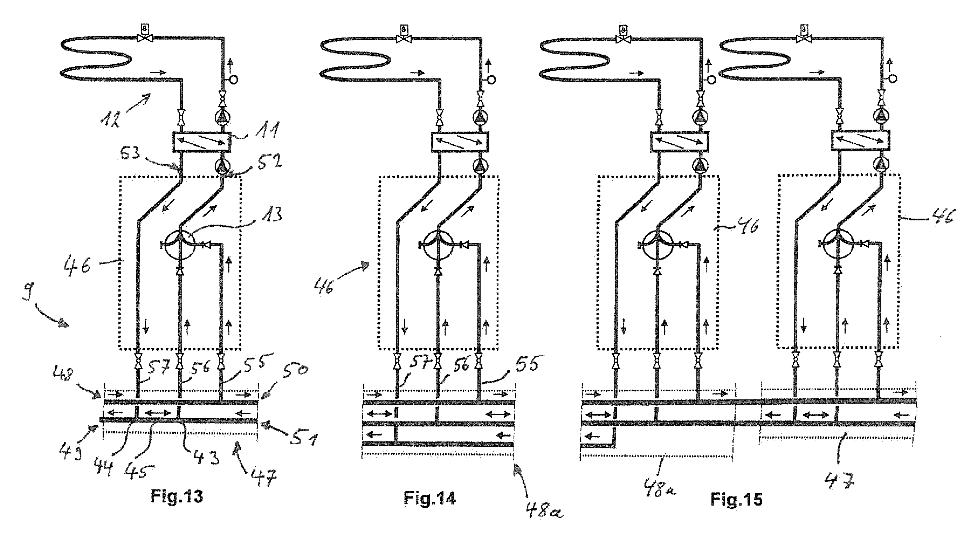

Fig. 13 zeigt ein weiteres Ausführungsbeispiel der erfindungsgemäßen Rücklaufnutzungs-Mischergruppe 9, bestehend aus einer erfindungsgemäßen Verteiler-Mischergruppe 46 und dem Grundelement eines Zwei-Kammer-Verteilers 47, welche über einen ersten Anschluss 55 mit der ersten heißen Vorlaufkammer, über einen zweiten Anschluss 56 mit dem stromaufwärtigen Entnahmepunkt 43 in der zur Vorlaufkammer thermisch isolierten zweiten Rücklaufkammer für warmen Rücklauf aus dem hier nicht dargestellten ungeregelten Hochtemperaturkreis und über einen dritten Anschluss 57 mit dem stromabwärtigen Rückspeisepunkt 44 in der Rücklaufkammer für das kalte Rücklaufwasser aus der Systemtrennung 11 miteinander verbunden sind. Wie die Rücklaufnutzungs-Mischergruppe 9 in Fig. 7 ist die gesamte Einheit über einen ersten Anschluss 48 mit dem Vorlauf der Wärmequelle, einem zweiten Anschluss 49 mit dem Rücklauf der Wärmequelle, einem dritten Anschluss 50 mit dem Vorlauf des ungeregelten Hochtemperaturkreises, einem vierten Anschluss 51 mit dem Rücklauf des ungeregelten Hochtemperaturkreises, einem fünften Anschluss 52 mit dem Vorlauf des geregelt über die Systemtrennung 11 versorgten Niedertemperaturkreises und einem sechsten Anschluss 53 mit dem Rücklauf des geregelt über die Systemtrennung 11 versorgten Niedertemperaturkreises 12 verbunden.

Durch einfache Verkettung einzelner Grundelemente des Zwei-Kammer-Verteilers 47 lassen sich größere Einheiten bilden und mit sowohl erfindungsgemäßen als auch herkömmlichen Mischergruppen mit oder ohne Rücklaufnutzung in beliebiger Anzahl und Reihenfolge kombinieren (siehe auch Fig. 17). Lediglich die Temperaturniveaus der Heizkreise müssen - wie bereits dargestellt - ein Temperaturgefälle in Richtung zum Wärmeerzeuger bilden, um eine optimale Rücklaufnutzung zu ermöglichen. Dabei ist die Vorlauftemperatur jeder einzelnen Baugruppe separat über ein eigenes Dreipunktsignal mittels Einwirkung auf den Stellantrieb des 3/2-Wege-Ventil 13 regelbar. Die als hydraulische Weiche wirkende Ausgleichsstrecke 45 befindet sich zwischen dem stromaufwärtigen Entnahmepunkt 43 und dem strom-abwärtigen Rückspeisepunkt 44 in der Rücklaufkammer des Zwei-Kammer-Verteilers. Dadurch ist es möglich die in der Technik üblichen horizontal installierten Verteiler und vertikal abgehenden Baugruppen mit den Vorzügen der erfindungsgemäßen Mischergruppen zu verbinden.

Fig. 14 zeigt in einem weiteren Ausführungsbeispiel das Grundelement eines Drei-Kammer-Verteilers 48a in Verbindung mit einer erfindungsgemäßen Verteiler-Mischergruppe 46. Er besteht aus einer ersten Verteilerkammer für den heißen Vorlauf aus dem dritt-untersten Anschluss 38 eines hier nicht dargestellten Pufferspeichers (siehe Fig. 11), die über einen ersten Anschluss 55 mit der Verteiler-Mischergruppe 46 verbunden ist, einer zweiten, zur ersten thermisch getrennten Verteilerkammer für den warmen Vorlauf aus dem zweit-untersten Anschluss 37 des Pufferspeichers, die über einen zweiten Anschluss 56 mit der erfindungsgemäßen Verteiler-Mischergruppe 46 verbunden ist, und einer dritten, zu den beiden ersten thermisch getrennten Verteilerkammer für das kalte Rücklaufwasser aus der Systemtrennung 11 zur Rückspeisung in den untersten Anschluss 36 des Pufferspeichers, wobei die dritte Verteilerkammer über einen dritten Anschluss 57 mit der Verteiler-Mischergruppe 46 verbunden ist. Durch Verkettung lassen sich einzelne Grundelemente eines Drei-Kammer-Verteilers 48a nicht nur zur Parallelschaltung verschiedener erfindungsgemäßer Verteiler-Mischergruppen 46 zu einer Einheit zusammenfügen. Diese Einheit lässt sich auch als Ganzes mit einer Einheit gemäß der Beschreibung der Fig. 13 zu einer Gesamtheit nach Fig. 15 zusammenfügen. Während Die Verteilereinheit nach Fig. 13 reine "Rücklaufnutzung" verwirklicht, realisiert die Einheit nach Fig. 14 "Zwei-Zonen-Entladung" und die Einheit nach Fig. 15 "Zwei-Zonen-Rücklaufnutzung". Dabei können die Baugruppen in beliebiger Reihenfolge aus erfindungsgemäßen Verteiler-Mischergruppen 46 oder herkömmlichen Baugruppen bestehen, solange nur die Heizkreise an sich einem Temperaturgefälle in Richtung zur Wärmequelle angeordnet sind.

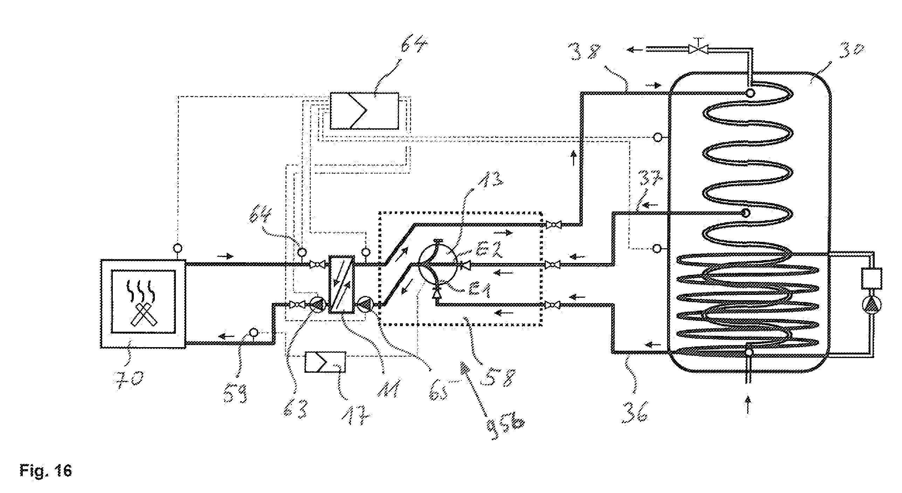

Fig. 16 zeigt ein weiteres Ausführungsbeispiel als Rücklauftemperaturanhebung einer als Holzkessel ausgebildeten Wärmequelle 70, Blockheizkraftwerkes oder ähnlichen Wärmeerzeugers, der über eine Systemtrennung 11 mit der erfindungsgemäßen Rücklaufanhebungs-Mischergruppe 58 verbunden ist. Um die vom Rücklauftemperaturfühler 59 gemessene Rücklauftemperatur konstant auf dem fest eingestellten Sollwert zu halten wirkt der Regler 17 mittels Dreipunktsignal auf den hier nicht dargestellten Stellantrieb des 3/2-Wege-Ventils 13 ein. Im Gegensatz zu den bisherigen Darstellungen sind jedoch hierbei die Stellbereiche I und III bzw. die Endpunkte 0 und IV vertauscht gemäß Tab. 3:

**Tab. 3**

| Betriebszustand | Verhältnis zum Ausgang |
|---|---|
| Endpunkt 0 | E1 offen, E2 geschlossen |
| Unterer Stellbereich I | E1 schließt, E2 öffnet |
| mittl. Betriebspunkt II | E1 geschlossen, E2 offen |
| Oberer Stellbereich III | E1 geschlossen, E2 schließt |
| Endpunkt IV | E1 geschlossen, E2 geschlossen |

Der Eingang E1 ist mit dem unteren Anschluss 36 eines Pufferspeichers 30 verbunden, der Eingang E2 mit dem darüberliegenden zweiten Anschluss 37. Ist die Rücklauftemperatur zu niedrig, so wird der Stellkörper in Richtung des Endpunktes IV bewegt, wodurch der sekundärseitige Volumenstrom reduziert wird, was nach den Überlegungen zu Fig. 1 zu einer in diesem Fall erwünschten, geringen Vorlauftemperaturabsenkung des sekundären Vorlaufes führt, der vollständig in den obersten Pufferanschluss 38 eingespeist wird. Befindet sich das 3/2-Wege-Ventil 13 im oberen Stellbereich III, so wird mit einer Drosselung des Zuflusses aus dem mittleren, wärmeren Pufferanschluss 37 geregelt, was zu einer schnelleren Erwärmung der oberen Heißzone und zu einer späteren Erwärmung der Kaltzone des Puffers führt.

Erst wenn die geforderte Rücklauftemperatur zum Wärmeerzeuger 32 nicht mehr durch Entdrosseln des Durchflusses aus dem mittleren Pufferanschluss 37 gehalten werden kann, öffnet das 3/2-Wege-Ventil 13 vom oberen Stellbereich III zum unteren Stellbereich I, was mit dem Mischen von warmem Pufferwasser aus dem mittleren Pufferanschluss 37 und kaltem Pufferwasser aus dem dritten, darunterliegenden Anschluss 36 verbunden ist. Zur Steuerung des Stellantriebes des 3/2-Wege-Ventils 13 ist also nur ein Dreipunktsignal ohne Rückmeldung.

Fig. 17 zeigt als weiteres Ausführungsbeispiel eine Heizungsanlage, an der gleich drei erfindungsgemäße Anlagenteileinheiten 95a, 95 b und 95c vorgesehen sind. Die Anlage umfasst zudem einen drucklosen Pufferspeicher 66, der sowohl durch ein gemäß der Beschreibung zu Fig. 10 offenbartes Verfahren bzw. eine offenbarte Vorrichtung entladen als auch durch ein gemäß der Beschreibung zu Fig. 10 offenbartes Verfahren bzw. eine offenbarte Vorrichtung beladen wird. Da beide Prozesse auch gleichzeitig stattfinden können, ist es möglich, die Heißzone des Puffers zu beladen und gleichzeitig die Kaltzone des Puffers zu entladen, was bedeutet, dass die Temperatur in der Heißzone ansteigt, während sie in der Kaltzone absinkt. Die Wirkung der hier nicht dargestellten, am Wärmetauscher 32 angeschlossenen regenerativen Wärmequelle, dem am Wärmetauscher 32 angeschlossenen Schichtlademodul bestehend aus einem Vorlauf-Umschaltventil 33 und/oder einem Rücklauf-Umschaltventil 34 und einer Umwälzpumpe 35 und der Trinkwarmwasserbereitung sind ebenfalls bereits dargestellt (siehe Beschreibung zu Fig. 11), wobei in Fig. 17 alternativ zur Trinkwarmwasserbereitung im Puffer 66 die Anbindung eines externen Trinkwasserspeichers 67 mit integriertem Wärmetauscher dargestellt ist.

Sämtliche Anlagenteile, die vom drucklosen Pufferwasser durchflossen werden, müssen selbstverständlich auf einer statischen Höhe unterhalb des Wasserspiegels im Puffer 66 installiert werden. Die Wärmeabnahme ist mit einem ebenfalls bereits beschriebenen (siehe Fig. 13) Zwei-Kammer-Verteiler 47 durch "Rücklaufnutzung" optimiert, die zu einer niedrigen Rücklauftemperatur und zu einem geringen Durchfluss auf der dem Zwei-Kammer-Verteiler 47 zugewandten Sekundärseite der Systemtrennung 11a führt, die an der Primärseite an eine Mischergruppe 71 mit 3/2-Wegeventil angeschlossen ist. Die zur Anlagenteileinheit 95a gehörende Systemtrennung 11 a trennt das drucklose Pufferwasser von den druckbetriebenen am Zweikammerverteiler 47 angeschlossenen Heizkreisen. Die Mischergruppe 71 regelt einen am äußeren Ende des Zwei-Kammerverteilers 47 angeordneten ungemischten Hochtemperaturheizkreis 72 aus. Die Mischereinrichtung 13 wird hierfür in Abhängigkeit der Werte eines Vorlauffühlers 75 gefahren.

Der Hochtemperaturheizkreis 72 fungiert des Weiteren als hydraulische Weiche für den Zwei-Kammer-Verteiler 47. Sofern der Hochtemperaturkreis 72 nicht eingesetzt wird, wird mit einem Umschaltventil 73 ein Zwischenstück 74 freigegeben, wodurch wiederum die hydraulische Weiche realisiert ist.

Ein Holzkessel als weitere Wärmequelle 70 ist über die Anlagenteileinheit 95b mit Systemtrennung 11 b und einer Rücklaufanhebungs-Mischergruppe 58 in einer zu Fig. 16 entsprechenden Weise ebenfalls an der Gesamtanlage angeschlossen. Somit kombiniert die Heizungsanlage nach Fig. 17 die Rücklaufanhebungs-Mischergruppe 58 mit der Mischergruppe 71. Eine weitere Mischergruppe 46 zur Rücklaufabsenkung (vergleiche Fig. 13) ist in erfindungsgemäßer Kombination über die Anlagenteileinheit 95c mit Systemtrennung 11 c mit einem Niedertemperaturheizkreis 12, z.B. einer Fußbodenheizung, verbunden und direkt am Zwei-Kammer-Verteiler 47 angeschlossen.

### Legende:

- 1: Wärmetauscher
- 2: primärseitiger Vorlaufanschluss
- 3: primärseitiger Rücklaufanschluss
- 4: sekundärseitiger Vorlaufanschluss
- 5: sekundärseitiger Rücklaufanschluss
- 6: Heizungsanlage
- 7: Heizkessel
- 8: Brenner
- 9: erfindungsgemäße Rücklaufnutzungs-Mischergruppe
- 10: ungeregelter Hochtemperaturkreis
- 11: Systemtrennung
- 12: geregelter Niedertemperaturkreis
- 13: 3/2-Wege-Ventil
- 13a: 2/2-Wege-Ventil
- 14: Umwälzpumpe des ungeregelten Hochtemperaturkreises
- 15: primärseitige Umwälzpumpe der Systemtrennung
- 16: sekundärseitige Umwälzpumpe des Niedertemperaturkreises
- 17: Regler
- 18: Außenfühler
- 19: Vorlauffühler des ungeregelten Hochtemperaturkreises
- 20: Vorlauffühler des geregelten Niedertemperaturkreises
- 21: Wandheizgerät mit eingebauter Umwälzpumpe
- 22: eingebaute Umwälzpumpe des Wandheizgerätes
- 23: herkömmliche Rücklaufnutzungs-Mischergruppe
- 24: geregelter Hochtemperaturkreis
- 25: Trinkwarmwasserspeicher mit integriertem Wärmetauscher
- 26: Trinkwarmwasser-Speicherfühler
- 27: Vorlauffühler des geregelten Hochtemperaturkreises
- 29: Trinkwarmwasser-Ladepumpe
- 30: druckfester Pufferspeicher
- 31: im Puffer integrierter Trinkwarmwasserbereiter
- 32: Wärmetauscher einer regenerativen Wärmequelle
- 33: Vorlauf-Umschaltventil eines Schichtlademoduls
- 34: Rücklauf-Umschaltventil eines Schichtlademoduls
- 35: Umwälzpumpe des Schichtlademoduls
- 36: unterster Anschluss des Pufferspeichers
- 37: zweit-unterster Anschluss des Pufferspeichers
- 38: dritt-unterster Anschluss des Pufferspeichers
- 39: oberster Anschluss des Pufferspeichers
- 40: erfindungsgemäße Zwei-Zonen-Entladungs-Mischergruppe
- 41: erfindungsgemäße Zwei-Zonen-Rücklaufnutzungs-Mischergruppe
- 42: Vorlauf-Umschaltventil des Wandheizgerätes
- 43: stromaufwärtiger Entnahmepunkt der Rücklaufnutzung
- 44: stromabwärtiger Rückspeisepunkt der Rücklaufnutzung
- 45: Ausgleichsstrecke als hydraulische Weiche wirkend
- 46: erfindungsgemäße Verteiler-Mischergruppe
- 47: Grundelement eines Zwei-Kammer-Verteilers
- 48a: Grundelement eines Drei-Kammer-Verteilers
- 48: Baugruppen-Anschluss Vorlauf Wärmequelle
- 49: Baugruppen-Anschluss Rücklauf Wärmequelle
- 50: Baugruppen-Anschluss Vorlauf Hochtemperaturkreis
- 51: Baugruppen-Anschluss Rücklauf Hochtemperaturkreis
- 52: Baugruppen-Anschluss Vorlauf Niedertemperaturkreis
- 53: Baugruppen-Anschluss Rücklauf Niedertemperaturkreis
- 55: Verteiler-Anschluss heiß
- 56: Verteiler-Anschluss warm
- 57: Verteiler-Anschluss kalt
- 58: erfindungsgemäße Rücklaufanhebungs-Mischergruppe
- 59: Rücklauftemperaturfühler
- 60: erfindungsgemäße Heiz- und Kühl-Mischergruppe
- 61: 2/2-Wege-Ventil
- 62: Mischer
- 63: Kesselpumpe
- 64: weiterer Regler
- 65: Umwälzpumpe
- 66: druckloser Pufferspeicher
- 67: externer Trinkwasserspeicher
- 70: Wärmequelle
- 71: Mischergruppe zur Rücklaufabsenkung
- 72: Hochtemperaturheizkreis
- 73: Umschaltventil
- 74: Zwischenstück
- 75: Vorlauffühler
- 90: unverzweigter Ausgangsstrang
- 91: unverzweigter Eingangsstrang
- 93: Mischeinrichtung
- 95: Anlagenteileinheit

- TV1: primärseitige Vorlauftemperatur
- TR1: primärseitige Rücklauftemperatur
- TV2: sekundärseitige Vorlauftemperatur
- TR2: sekundärseitige Rücklauftemperatur
- Q1: primärseitiger Durchfluss
- Q2: sekundärseitiger Durchfluss

- E1: erster Eingang des 3/2-Wege-Ventils
- E2: zweiter Eingang, permanent verschlossen in Variante 2
- E3: dritter Eingang, permanent verschlossen in Variante 1
- A: Ausgang des 3/2-Wege-Ventils

- 0: Endpunkt
- I: unterer Betriebsbereich
- II: mittlerer Betriebspunkt
- III: oberer Betriebsbereich
- IV: Endpunkt

## Patentansprüche

1. Heizungs- oder Kühlungsanlage umfassend
a) mindestens einen Wärme-/Kälteerzeuger (7, 21, 70) und
b) mindestens eine Anlagenteileinheit (95) mit einem als Systemtrennung eingesetzten Wärme-/Kältetauscher (11), einer zwei Eingänge (E1, E2 oder E3) und einen Ausgang aufweisenden Mischeinrichtung (13, 13a, 61) und einer Pumpe (15, 65), wobei
aa) der Ausgang der Mischeinrichtung (13, 13a, 61) über einen unverzweigten Eingangsstrang (91) mit einem mischerseitigen Eingang des Wärme-/Kältetauschers (11) verbunden ist,
bb) die Pumpe (15, 65) im unverzweigten Eingangsstrang (91) oder in einem unverzweigten Ausgangsstrang (90) des Wärme-/Kältetauschers (11) vorgesehen ist, und
cc) die Mischeinrichtung (13, 13a, 61) ein regelbares 4-Wege-Mischerventil mit einem äußeren ersten Eingang (E1), einem mittleren zweiten Eingang (E2) und äußeren dritten Eingang (E3) umfasst, wobei intern entweder der erste Eingang (E1) und der zweite Eingang (E2) oder der zweite Eingang (E2) und der dritte Eingang (E3) gleichzeitig geöffnet sein können,
**dadurch gekennzeichnet, dass**
dd) einer der äußeren Eingänge (E1, E3) des 4-Wege-Mischerventils extern verschlossen ist und
ee) ein mischerseitiger Ausgang des Wärme-/Kältetauschers (11) über den Ausgangsstrang (90) unverzweigt entweder mit
eea) einem Rücklauf des mindestens einen Wärme-/Kälteerzeugers (7, 21, 70) oder einer sonstigen Wärme-/Kältequelle (7,30, 66, 80, 82) der Heizungs- oder Kühlungsanlage oder
eeb) einem Vorlauf einer Wärme-/Kältesenke (10, 30) der Heizungs- oder Kühlungsanlage verbunden ist.

2. Heizungs- oder Kühlungsanlage umfassend
a) mindestens einen Wärme-/Kälteerzeuger (7, 21, 70) und
b) mindestens eine Anlagenteileinheit (95) mit einem als Systemtrennung eingesetzten Wärme-/Kältetauscher (11), einer zwei Eingänge (E1, E2 oder E3) und einen Ausgang aufweisenden Mischeinrichtung (13, 13a, 61) und einer Pumpe (15, 65), wobei
aa) der Ausgang der Mischeinrichtung (13, 13a, 61) über einen unverzweigten Eingangsstrang (91) mit einem mischerseitigen Eingang des Wärme-/Kältetauschers (11) verbunden ist,
bb) die Pumpe (15, 65) im unverzweigten Eingangsstrang (91) oder in einem unverzweigten Ausgangsstrang (90) des Wärme-/Kältetauschers (11) vorgesehen ist,
**dadurch gekennzeichnet, dass**
cc) ein mischerseitiger Ausgang des Wärme-/Kältetauschers (11) über den Ausgangsstrang (90) unverzweigt entweder mit
cca) einem Rücklauf des mindestens einen Wärme-/Kälteerzeugers (7, 21, 70) oder einer sonstigen Wärme-/Kältequelle (7,30, 66, 80, 82) der Heizungs- oder Kühlungsanlage oder
ccb) einem Vorlauf einer Wärme-/Kältesenke (10, 30) der Heizungs- oder Kühlungsanlage verbunden ist,
wobei
dd) die Mischeinrichtung eine Kombination eines 3-Wege-Mischerventils mit einem 2-Wege-Drosselventil ist, wobei das 2-Wege-Drosselventil vor einem Eingang des 3-Wege-Mischerventils geschaltet wird, und
ee) eine Steuerung vorhanden ist, welche so eingerichtet ist, dass
eea) das 2-Wege-Drosselventil erst dann schließt, wenn der daran angeschlossene Eingang des 3-Wege-Mischerventils vollständig geöffnet ist und
eeb) das 2-Wege-Drosselventil vollständig geöffnet ist, bevor der daran angeschlossene Eingang des 3-Wege-Mischerventils schließt.

3. Heizungs- oder Kühlungsanlage nach Anspruch 1, **dadurch gekennzeichnet, dass** mindestens ein erster Hochtemperaturheiz-/Niedertemperaturkühlkreislauf (10) vorgesehen ist und der nicht extern verschlossene äußere Eingang (E1 oder E3) der über die Systemtrennung (11) einen Niedertemperaturheiz-/Hochtemperaturkühlkreislauf (12) versorgenden Mischeinrichtung (13) mit dem Vorlauf und der zweite Eingang (E2) mit dem Rücklauf des mindestens einen Wärme-/Kälteerzeugers (7, 21) verbunden ist.

4. Heizungs- oder Kühlungsanlage nach Anspruch 3, **dadurch gekennzeichnet, dass** zusätzlich zum ersten Hochtemperaturheiz-/Niedertemperaturkühlkreislauf (10) ein zweiter Hochtemperaturheiz-/Niedertemperaturkühlkreislauf (24) mit im Falle der Heizung niedrigerer, im Falle der Kühlung höherer Auslegungstemperatur geschaltet ist und
mittels einer zweiten Mischeinrichtung (93) der zweite Hochtemperaturheiz-/Niedertemperaturkühlkreislauf (24) vom Vorlauf und/oder vom Rücklauf des ersten Hochtemperaturheiz-/Niedertemperaturkühlkreislaufes (10) speisbar ist.

5. Heizungs- oder Kühlungsanlage nach Anspruch 1, **dadurch gekennzeichnet, dass** ein Pufferspeicher (30, 66) mit einem ersten, vorzugsweise regenerativen Wärme-/Kälteerzeuger vorgesehen ist und die Anlagenteileinheit (95) über den als Systemtrennung dienenden Wärmetauscher (11) einen Niedertemperaturheiz-/Hochtemperaturkühlkreislauf (12) versorgt, wobei der mischerseitige unverzweigte Ausgangsstrang (90) des Wärmetauschers (11) im Falle der Heizung in den untersten Anschluss (36), im Falle der Kühlung in den obersten Anschluss des Pufferspeichers (30, 66) mündet, der mittlere zweite Eingang (E2) der Mischeinrichtung (13, 61) der Anlageneinheit (95) mit einem im Falle der Heizung zweituntersten Anschluss (37), im Falle der Kühlung zweitobersten Anschluss des Pufferspeichers (30, 66) und der nicht extern verschlossene äußere Eingang (E1 oder E3) der Mischeinrichtung (13, 61) mit dem Vorlauf eines als Spitzenlastversorger vorgesehenen zweiten Wärme-/Kälteerzeugers (7, 21) verbunden ist.

6. Heizungs- oder Kühlungsanlage nach Anspruch 5, **dadurch gekennzeichnet, dass** ein Hochtemperaturheiz-/Niedertemperaturkühlkreislauf (24) vorgesehen ist, dessen Rücklauf an einer Ausgleichstrecke (45) zwischen dem mittleren Eingang (E2) der Mischeinrichtung (13) und dem im Falle der Heizung zweituntersten Anschluss (37), im Falle der Kühlung zweitobersten Anschluss des Pufferspeichers (30, 66) angeschlossen ist.

7. Heizungs- oder Kühlungsanlage nach einem der vorherigen Ansprüche, **dadurch gekennzeichnet, dass** ein Zweikammer-Verteiler (47) oder ein Dreikammerverteiler (48a) vorgesehen ist, an dem mindestens zwei Heiz-/Kühlkreisläufe (12, 72) parallel angeschlossen sind, wobei zumindest einer der Heiz-/Kühlkreise (12, 72) über die Anlagenteileinheit (95, 46) oder eine der Anlagenteileinheiten (95a-c) am Zweikammer-Verteiler (47) oder am Dreikammer-Verteiler (48a) angeschlossenen ist und wobei im Falle des Dreikammerverteilers (48a) eine der Kammern an einem Pufferspeicher (30, 66) angeschlossen ist.

8. Heizungs- oder Kühlungsanlage nach einem der vorherigen Ansprüche, **dadurch gekennzeichnet, dass** ein Zweikammer-Verteiler (47) oder ein Dreikammerverteiler (48a) vorgesehen ist, an dem mindestens zwei Heiz-/Kühlkreisläufe (12, 72) parallel angeschlossen sind, wobei der Zweikammer-Verteiler (47) über die Anlagenteileinheit (95, 46) oder eine der Anlageteileinheiten (95a-c) mit der restlichen Heizungs-/Kühlungsanlage verbunden ist und wobei im Falle des Dreikammerverteilers (48a) eine der Kammern an einem Pufferspeicher (30, 66) angeschlossen ist.

9. Heizungs- oder Kühlungsanlage nach einem der vorherigen Ansprüche, **dadurch gekennzeichnet, dass** ein Wärme-/Kälteerzeuger (70) mit vorgegebener Rücklauftemperatur an der der Mischeinrichtung (13, 13a, 61) abgewandten Seite des Wärmetauschers (11) der nun zur im Falle der Heizungsanlage Rücklaufanhebung und im Falle der Kühlungsanlage Rücklaufabsenkung vorgesehenen Anlagenteileinheit (95b) angeschlossen ist.

10. Heizungs- oder Kühlungsanlage nach Ansprüche 1 und 9, **dadurch**
**gekennzeichnet, dass** der nicht extern verschlossene äußere Eingang (E1 oder E3) der Mischeinrichtung (13) am im Falle der Heizung untersten Anschluss (36), im Falle der Kühlung obersten Anschluss eines Pufferspeichers (30, 66) und der mittlere Eingang (E2) der Mischeinrichtung am im Falle der Heizung zweituntersten Anschluss (37), im Falle der Kühlung zweitobersten Anschluss des Pufferspeichers (30, 66) angeschlossen ist.

11. Heizungs- oder Kühlungsanlage nach Anspruch 1 und nach Anspruch 9 oder 10 mit Rückbezug
auf Anspruch 8, **dadurch gekennzeichnet, dass** der unverzweigte Ausgangsstrang (90a) der gemäß Anspruch 8 den Zweikammer-Verteiler (47) anschließenden Anlagenteileinheit (95a) in einen Rücklauf oder Vorlauf mündet, an den in Flussrichtung folgend der nicht extern verschlossene äußere Eingang (E1 oder E3) der gemäß Anspruch 9 zur im Falle der Heizungsanlage Rücklaufanhebung und im Falle der Kühlungsanlage Rücklaufabsenkung vorgesehenen Anlagenteileinheit (95b) ebenfalls angeschlossen ist.

12. Heizungs- oder Kühlungsanlage nach Anspruch 11 mit Rückbezug auf Anspruch 10, **dadurch gekennzeichnet, dass** der unverzweigte Ausgangsstrang (90a) der gemäß Anspruch 10 an den Zweikammer-Verteiler (47) anschließenden Anlagenteileinheit (95a) in einen im Falle der Heizung untersten, im Falle der Kühlung obersten Anschluss (36) des Pufferspeichers (30, 66) mündet.

13. Verfahren zum Betrieb von Heizungsanlagen oder Kühlungsanlagen, bei dem
a) mittels eines Wärme-/Kältetauschers (11) eine Systemtrennung eingesetzt wird,
b) der Wärme-/Kältetauscher (11) über eine einen Ausgang und zwei Eingänge (E1, E2 oder E3) aufweisende Mischeinrichtung (13, 13a, 61) mit Heiz-/Kühlfluid versorgt wird, wobei zwischen dem Ausgang der Mischeinrichtung (13, 13a, 61) und dem Eingang des Wärme-/Kältetauscher (11) ein Eingangsstrang (91) angeordnet wird, und
c) im unverzweigten Eingangsstrang (91) oder in einem unverzweigten Ausgangsstrang (90) des Wärme-/Kältetauschers (11) das Heiz-/Kühlfluid aktiv angetrieben wird,
wobei
d) das Heiz-/Kühlfluid über den mischerseitigen Ausgangsstrang (90) unverzweigt entweder
aa) einem Rücklauf eines Wärme-/Kälteerzeugers (7, 21, 70) oder einer sonstigen Wärme-/Kältequelle (7,30, 66, 80, 82) oder
bb) einem Vorlauf einer Wärme-/Kältesenke (10, 30)
zugeführt wird, wobei
e) dem Wärme-Kältetauscher (11) entweder über einen ersten der beiden Eingänge (E1 oder E3) allein ein aus einer ersten Quelle stammender ersten Heiz-/Kühlfluidstrom einer ersten Temperatur oder über beide Eingänge (E1 oder E3, E2) eine Mischung des Heiz-/Kühlfluidstroms der ersten Quelle mit einem anders temperierten zweiten Heiz-/Kühlfluidstrom einer zweiten Quelle oder über den zweiten Eingang (E2) allein der zweite Heiz-/Kühlfluidstrom zugeführt wird, wobei der zweite Heiz-/Kühlfluidstrom im Falle der Heizung niedriger, im Falle der Kühlung höher temperiert ist und der zweite Eingang (E2) bei Bedarf bei geschlossenem ersten Eingang (E1 oder E3) gedrosselt wird.

14. Verfahren nach Anspruch 13, **dadurch gekennzeichnet, dass** eine Wärmequelle/Kältequelle (70) mit vorgegebener Rücklauftemperatur verwendet und an die mischerabgewandte Seite des Wärmetauschers (11) angeschlossen wird.

## Claims

1. Heating or cooling system comprising
a) at least one heat/cold generator (7, 21, 70), and
b) at least one system subunit (95) with a heat/cold exchanger (11) which is used as a system separation, a mixing device (13, 13a, 61) which has two inlets (E1, E2 or E3) and one outlet, and a pump (15, 65),
aa) the outlet of the mixing device (13, 13a, 61) being connected via an unbranched inlet section (91) to a mixer-side inlet of the heat/cold exchanger (11),
bb) the pump (15, 65) being provided in the unbranched inlet section (91) or in an unbranched outlet section (90) of the heat/cold exchanger (11), and
cc) the mixing device (13, 13a, 61) comprising a controllable 4-way mixer valve with an outer first inlet (E1), a middle second inlet (E2) and an outer third inlet (E3), it being possible internally for either the first inlet (E1) and the second inlet (E2) or the second inlet (E2) and the third inlet (E3) to be open at the same time,
**characterized in that**
dd) one of the outer inlets (E1, E3) of the 4-way mixer valve is closed externally, and
ee) a mixer-side outlet of the heat/cold exchanger (11) is connected via the outlet section (90) in an unbranched manner either to
eea) a return line of the at least one heat/cold generator (7, 21, 70) or of another heat/cold source (7, 30, 66, 80, 82) of the heating or cooling system, or
eeb) a feed line of a heat/cold sink (10, 30) of the heating or cooling system.

2. Heating or cooling system comprising
a) at least one heat/cold generator (7, 21, 70), and
b) at least one system subunit (95) with a heat/cold exchanger (11) which is used as system separation, a mixing device (13, 13a, 61) which has two inlets (E1, E2 or E3) and one outlet, and a pump (15, 65),
aa) the outlet of the mixing device (13, 13a, 61) being connected via an unbranched inlet section (91) to a mixer-side inlet of the heat/cold exchanger (11),
bb) the pump (15, 65) being provided in the unbranched inlet section (91) or in an unbranched outlet section (90) of the heat/cold exchanger (11),
**characterized in that**
cc) a mixer-side outlet of the heat/cold exchanger (11) is connected via the outlet section (90) in an unbranched manner either to
cca) a return line of the at least one heat/cold generator (7, 21, 70) or of another heat/cold source (7, 30, 66, 80, 82) of the heating or cooling system, or
ccb) a feed line of a heat/cold sink (10, 30) of the heating or cooling system,
dd) the mixing device being a combination of a 3-way mixer valve with a 2-way throttle valve, the 2-way throttle valve being connected upstream of an inlet of the 3-way mixer valve, and
ee) there being a controller which is set up in such a way that
eea) the 2-way throttle valve closes only when the inlet of the 3-way mixer valve which is connected to it is completely open, and
eeb) the 2-way throttle valve is completely open before the inlet of the 3-way mixer valve which is connected to it closes.

3. Heating or cooling system according to Claim 1, **characterized in that** at least one first high temperature heating/low temperature cooling circuit (10) is provided, and the outer inlet (E1 or E3), which is not closed externally, of the mixing device (13) which supplies a low temperature heating/high temperature cooling circuit (12) via the system separation (11) is connected to the feed line, and the second inlet (D2) is connected to the return line of the at least one heat/cold generator (7, 21).

4. Heating or cooling system according to Claim 3, **characterized in that**, in addition to the first high temperature heating/low temperature cooling circuit (10), a second high temperature heating/low temperature cooling circuit (24) is connected with a lower design temperature in the case of heating and a higher design temperature in the case of cooling, and the second high temperature heating/low temperature cooling circuit (24) can be fed by means of a second mixing device (93) by the feed line and/or by the return line of the first high temperature heating/low temperature cooling circuit (10).

5. Heating or cooling system according to Claim 1, **characterized in that** a buffer store (30, 66) with a first, preferably regenerative heat/cold generator is provided, and the system subunit (95) supplies a low temperature heating/high temperature cooling circuit (12) via the heat exchanger (11) which serves as a system separation, the mixer-side unbranched outlet section (90) of the heat exchanger (11) opening into the lowermost connector (36) in the case of heating and into the uppermost connector of the buffer store (30, 66) in the case of cooling, the middle second inlet (E2) of the mixing device (13, 61) of the system unit (95) being connected to a second lowest connector (37) in the case of heating and to a second highest connector of the buffer store (30, 66) in the case of cooling, and the outer inlet (E1 or E3), which is not closed externally, of the mixing device (13, 61) being connected to the feed line of a second heat/cold generator (7, 21) which is provided as a peak load supplier.

6. Heating or cooling system according to Claim 5, **characterized in that** a high temperature heating/low temperature cooling circuit (24) is provided, the return line of which is connected to an equalization section (45) between the middle inlet (E2) of the mixing device (13) and the second lowest connector (37) in the case of heating and the second highest connector of the buffer store (30, 66) in the case of cooling.

7. Heating or cooling system according to one of the preceding claims, **characterized in that** a two-chamber distributor (47) or a three-chamber distributor (48a) is provided, to which at least two heating/cooling circuits (12, 72) are connected in parallel, at least one of the heating/cooling circuits (12, 72) being connected via the system subunit (95, 46) or one of the system subunits (95a-c) to the two-chamber distributor (47) or to the three-chamber distributor (48a), and one of the chambers being connected to a buffer store (30, 66) in the case of the three-chamber distributor (48a).

8. Heating or cooling system according to one of the preceding claims, **characterized in that** a two-chamber distributor (47) or a three-chamber distributor (48a) is provided, to which at least two heating/cooling circuits (12, 72) are connected in parallel, the two-chamber distributor (47) being connected via the system subunit (95, 46) or one of the system subunits (95a-c) to the remaining heating/cooling system, and one of the chambers being connected to a buffer store (30, 66) in the case of the three-chamber distributor (48a).

9. Heating or cooling system according to one of the preceding claims, **characterized in that** a heat/cold generator (70) with a predefined return line temperature is connected on the side, which faces away from the mixing device (13, 13a, 61), of the heat exchanger (11) of the system subunit (95b) which is then provided for return line raising in the case of the heating system and return line lowering in the case of the cooling system.

10. Heating or cooling system according to Claims 1 and 9, **characterized in that** the outer inlet (E1 or E3), which is not closed externally, of the mixing device (13) is connected to the lowermost connector (36) in the case of heating, and to the uppermost connector of a buffer store (30, 66) in the case of cooling, and the middle inlet (E2) of the mixing device is connected to the second lowest connector (37) in the case of heating and to the second highest connector of the buffer store (30, 66) in the case of cooling.

11. Heating or cooling system according to Claim 1 and according to Claim 9 or 10 with a back-reference to Claim 8, **characterized in that** the unbranched outlet section (90a) of the system subunit (95a) which adjoins the two-chamber distributor (47) according to Claim 8 opens into a return line or feed line, to which, following in the flow direction, the outer inlet (E1 or E3), which is not closed externally, of the system subunit (95b) which is provided, according to Claim 9 for return line raising in the case of the heating system and for return line lowering in the case of the cooling system is likewise connected.

12. Heating or cooling system according to Claim 11 with a back-reference to Claim 10, **characterized in that** the unbranched outlet section (90a) of the system subunit (95a) which adjoins the two-chamber distributor (47) according to Claim 10 opens into a lowermost connector in the case of heating and to an uppermost connector (36) of the buffer store (30, 66) in the case of cooling.

13. Method for operating heating systems or cooling systems, in which method
a) a system separation is used by means of a heat/cold exchanger (11),
b) the heat/cold exchanger (11) is supplied with heating/cooling fluid via a mixing device (13, 13a, 61) which has an outlet and two inlets (E1, E2 or E3), an inlet section (91) being arranged between the outlet of the mixing device (13, 13a, 61) and the inlet of the heat/cold exchanger (11), and
c) the heating/cooling fluid being driven actively in the unbranched inlet section (91) or in an unbranched outlet section (90) of the heat/cold exchanger (11),
d) the heating/cooling fluid being fed via the mixer-side outlet section (90) in an unbranched manner either
aa) to a return line of a heat/cold generator (7, 21, 70) or of another heat/cold source (7, 30, 66, 80, 82), or
bb) to a feed line of a heat/cold sink (10, 30),
e) the heat/cold exchanger (11) being fed either, via a first of the two inlets (E1 or E3), solely with a first heating/cooling fluid flow at a first temperature which comes from a first source or, via both inlets (E1 or E3, E2), with a mixture of the heating/cooling fluid flow of the first source with a second heating/cooling fluid flow at a different temperature of a second source or, via the second inlet (E2), solely with the second heating/cooling fluid flow, the second heating/cooling fluid flow being at a lower temperature in the case of heating and at a higher temperature in the case of cooling, and the second inlet (E2) being throttled if required in the case of a closed first inlet (E1 or E3).

14. Method according to Claim 13, **characterized in that** a heat source/cold source (70) with a predefined return line temperature is used and is connected to that side of the heat exchanger (11) which faces away from the mixer.

## Revendications

1. Installation de chauffage ou de refroidissement, comprenant :
a) au moins un générateur de chaleur/froid (7, 21, 70) et
b) au moins une unité de partie d'installation (95) comprenant un échangeur de chaleur/froid (11) utilisé en tant que séparation de systèmes, un dispositif de mélange (13, 13a, 61) présentant deux entrées (E1, E2 ou E3) et une sortie, et une pompe (15, 65),
aa) la sortie du dispositif de mélange (13, 13a, 61) étant connectée par le biais d'une section d'entrée non ramifiée (91) à une entrée côté mélangeur de l'échangeur de chaleur/froid (11),
bb) la pompe (15, 65) étant prévue dans la section d'entrée non ramifiée (91) ou dans une section de sortie non ramifiée (90) de l'échangeur de chaleur/froid (11), et
cc) le dispositif de mélange (13, 13a, 61) comprenant une soupape mélangeuse à 4 voies réglable avec une première entrée extérieure (E1), une deuxième entrée centrale (E2) et une troisième entrée extérieure (E3), soit la première entrée (E1) et la deuxième entrée (E2) ou la deuxième entrée (E2) et la troisième entrée (E3) pouvant être ouvertes simultanément vis-à-vis de l'intérieur,
**caractérisée en ce que**
dd) l'une des entrées extérieures (E1, E3) de la soupape mélangeuse à 4 voies étant fermée vis-à-vis de l'extérieur et
ee) une sortie côté mélangeur de l'échangeur de chaleur/froid (11) étant connectée par le biais de la section de sortie (90) de manière non ramifiée
eea) soit à une section de retour de l'au moins un générateur de chaleur/froid (7, 21, 70) ou une autre source de chaleur/froid (7, 30, 66, 80, 82) de l'installation de chauffage ou de refroidissement,
eeb) soit à une section aller d'un puits de chaleur/froid (10, 30) de l'installation de chauffage ou de refroidissement.

2. Installation de chauffage ou de refroidissement, comprenant :
a) au moins un générateur de chaleur/froid (7, 21, 70) et
b) au moins une unité de partie d'installation (95) comprenant un échangeur de chaleur/froid (11) utilisé en tant que séparation de systèmes, un dispositif de mélange (13, 13a, 61) présentant deux entrées (E1, E2 ou E3) et une sortie, et une pompe (15, 65),
aa) la sortie du dispositif de mélange (13, 13a, 61) étant connectée par le biais d'une section d'entrée non ramifiée (91) à une entrée côté mélangeur de l'échangeur de chaleur/froid (11),
bb) la pompe (15, 65) étant prévue dans la section d'entrée non ramifiée (91) ou dans une section de sortie non ramifiée (90) de l'échangeur de chaleur/froid (11),
**caractérisée en ce que**
cc) une sortie côté mélangeur de l'échangeur de chaleur/froid (11) est connectée par le biais de la section de sortie (90) de manière non ramifiée
cca) soit à une section de retour de l'au moins un générateur de chaleur/froid (7, 21, 70) ou à une autre source de chaleur/froid (7, 30, 66, 80, 82) de l'installation de chauffage ou de refroidissement,
ccb) soit à une section aller d'un puits de chaleur/froid (10, 30) de l'installation de chauffage ou de refroidissement,
dd) le dispositif de mélange est une combinaison d'une soupape mélangeuse à 3 voies avec une soupape d'étranglement à 2 voies, la soupape d'étranglement à 2 voies étant montée avant une entrée de la soupape mélangeuse à 3 voies, et
ee) une commande est prévue, laquelle est réalisée de telle sorte que
eea) la soupape d'étranglement à 2 voies se ferme seulement après que l'entrée de la soupape mélangeuse à 3 voies qui lui est raccordée est complètement ouverte et
eeb) la soupape d'étranglement à 2 voies est complètement ouverte avant que l'entrée de la soupape mélangeuse à 3 voies qui lui est raccordée se ferme.

3. Installation de chauffage ou de refroidissement selon la revendication 1, **caractérisée en ce qu'**au moins un premier circuit de chauffage à haute température/de refroidissement à basse température (10) est prévu et l'entrée extérieure non fermée vis-à-vis de l'extérieur (E1 ou E3) du dispositif de mélange (13) alimentant par le biais de la séparation des systèmes (11) un circuit de chauffage à basse température/de refroidissement à haute température (12) est connectée à la section aller et la deuxième entrée (E2) est connectée à la section retour de l'au moins un générateur de chaleur/froid (7, 21).

4. Installation de chauffage et/ou de refroidissement selon la revendication 3, **caractérisée en ce qu'**en plus du premier circuit de chauffage à haute température/de refroidissement à basse température (10), un deuxième circuit de chauffage à haute température/de refroidissement à basse température (24) est branché avec une température nominale inférieure dans le cas du chauffage et supérieure dans le cas du refroidissement et
peut être alimenté au moyen d'un deuxième dispositif de mélange (93) du deuxième circuit de chauffage à haute température/de refroidissement à basse température (24) par la section aller et/ou la section retour du premier circuit de chauffage à haute température/de refroidissement à basse température (10).

5. Installation de chauffage ou de refroidissement selon la revendication 1, **caractérisée en ce qu'**il est prévu un réservoir tampon (30, 66) avec un premier générateur de chaleur/froid, de préférence régénératif, et l'unité de partie d'installation (95) alimente, par le biais de l'échangeur de chaleur (11) servant de séparation des systèmes, un circuit de chauffage à basse température/de refroidissement à haute température (12), la section de sortie non ramifiée côté mélangeur (90) de l'échangeur de chaleur (11) débouchant, dans le cas du chauffage, dans le raccord le plus inférieur (36), et dans le cas du refroidissement, dans le raccord le plus supérieur du réservoir tampon (30, 66), la deuxième entrée centrale (E2) du dispositif de mélange (13, 61) de l'unité d'installation (95) étant connectée à un deuxième raccord le plus inférieur (37) dans le cas du chauffage, et dans le cas du refroidissement à un deuxième raccord le plus supérieur du réservoir tampon (30, 66) et l'entrée extérieure non fermée vis-à-vis de l'extérieur (E1 ou E3) du dispositif de mélange (13, 61) étant connectée à la section aller d'un deuxième générateur de chaleur/froid (7, 21) prévu en tant que dispositif d'alimentation en cas de pics de consommation.

6. Installation de chauffage ou de refroidissement selon la revendication 5, **caractérisée en ce qu'**il est prévu un circuit de chauffage à haute température/de refroidissement à basse température (24), dont la section de retour est raccordée à une section de compensation (45) entre l'entrée centrale (E2) du dispositif de mélange (13) et le deuxième raccord le plus inférieur (37) dans le cas du chauffage, et dans le cas du refroidissement, le deuxième raccord le plus supérieur du réservoir tampon (30, 66).

7. Installation de chauffage ou de refroidissement selon l'une quelconque des revendications précédentes, **caractérisée en ce qu'**il est prévu un distributeur à deux chambres (47) ou un distributeur à trois chambres (48a) auquel sont raccordés en parallèle au moins deux circuits de chauffage/refroidissement (12, 72), au moins l'un des circuits de chauffage/refroidissement (12, 72) étant raccordé par le biais de l'unité de partie d'installation (95, 46) ou de l'une des unités de partie installation (95a-c) au distributeur à deux chambres (47) ou au distributeur à trois chambres (48a) et, dans le cas du distributeur à trois chambres (48a), l'une des chambres étant raccordée à un réservoir tampon (30, 66).

8. Installation de chauffage ou de refroidissement selon l'une quelconque des revendications précédentes, **caractérisée en ce qu'**il est prévu un distributeur à deux chambres (47) ou un distributeur à trois chambres (48a), auquel sont raccordés en parallèle au moins deux circuits de chauffage/refroidissement (12, 72), le distributeur à deux chambres (47) étant connecté par le biais de l'unité de partie d'installation (95, 46) ou de l'une des unités de partie d'installation (95a-c) au reste de l'installation de chauffage/refroidissement et, dans le cas du distributeur à trois chambres (48a), l'une des chambres étant raccordée à un réservoir tampon (30, 66).

9. Installation de chauffage ou de refroidissement selon l'une quelconque des revendications précédentes, **caractérisée en ce qu'**un générateur de chaleur/froid (70) avec une température de retour prédéterminée est raccordé au côté de l'échangeur de chaleur (11) opposé au dispositif de mélange (13, 13a, 61) de l'unité de partie d'installation (95b) prévue à présent pour augmenter la section de retour dans le cas de l'installation de chauffage et pour réduire la section de retour dans le cas de l'installation de refroidissement.

10. Installation de chauffage ou de refroidissement selon les revendications 1 et 9, **caractérisée en ce que** l'entrée extérieure non fermée vis-à-vis de l'extérieur (E1 ou E3) du dispositif de mélange (13) est raccordée dans le cas du chauffage, au raccord le plus inférieur (36) et dans le cas du refroidissement, au raccord le plus supérieur d'un réservoir tampon (30, 66) et l'entrée centrale (E2) du dispositif de mélange est raccordée, dans le cas du chauffage, au deuxième raccord le plus inférieur (37), et dans le cas du refroidissement, au deuxième raccord le plus supérieur du réservoir tampon (30, 66).

11. Installation de chauffage ou de refroidissement selon la revendication 1 et selon la revendication 9 ou 10 lorsqu'elles se rapportent à la revendication 8, **caractérisée en ce que** la section de sortie non ramifiée (90a) de l'unité de partie d'installation (95a) se raccordant selon la revendication 8 au distributeur à deux chambres (47), débouche dans une section de retour ou une section aller, à laquelle est également raccordée, dans le sens de l'écoulement, l'entrée extérieure non fermée vis-à-vis de l'extérieur (E1 ou E3) de l'unité de partie d'installation (95b) prévue, selon la revendication 9, pour augmenter la section de retour dans le cas de l'installation de chauffage et pour réduire la section de retour dans le cas de l'installation de refroidissement.

12. Installation de chauffage ou de refroidissement selon la revendication 11 lorsqu'elle se rapporte à la revendication 10, **caractérisée en ce que** la section de sortie non ramifiée (90a) de l'unité de partie d'installation (95a) se raccordant selon la revendication 10 au distributeur à deux chambres (47), débouche dans un raccord (36) du réservoir tampon (30, 66) le plus inférieur dans le cas du chauffage et le plus supérieur dans le cas du refroidissement.

13. Procédé pour faire fonctionner des installations de chauffage ou des installations de refroidissement, dans lequel
a) une séparation des systèmes est établie au moyen d'un échangeur de chaleur/froid (11),
b) l'échangeur de chaleur/froid (11) est alimenté en fluide de chauffage/refroidissement par le biais d'un dispositif de mélange (13, 13a, 61) présentant une sortie et deux entrées (E1, E2 ou E3), une section d'entrée (91) étant disposée entre la sortie du dispositif de mélange (13, 13a, 61) et l'entrée de l'échangeur de chaleur/froid (11), et
c) le fluide de chauffage/refroidissement étant entraîné activement dans la section d'entrée non ramifiée (91) ou dans une section de sortie non ramifiée (90) de l'échangeur de chaleur/froid (11),
d) le fluide de chauffage/refroidissement étant acheminé de manière non ramifiée par le biais de la section de sortie côté mélangeur (90)
aa) soit à une section de retour d'un générateur de chaleur/froid (7, 21, 70) ou à une autre source de chaleur/froid (7, 30, 66, 80, 82),
bb) soit à une section aller d'un puits de chaleur/froid (10, 30),
e) soit seulement un premier flux de fluide de chauffage/refroidissement provenant d'une première source à une première température étant acheminé à l'échangeur de chaleur/froid (11) par le biais de une première des deux entrées (E1 ou E3), soit un mélange du flux de fluide de chauffage/refroidissement de la première source avec un autre, deuxième, flux de fluide de chauffage/ refroidissement régulé en température d'une deuxième source étant acheminé à l'échangeur de chaleur/froid (11) par le biais des deux entrées (E1 ou E3, E2), soit seulement le deuxième flux de fluide de chauffage/refroidissement étant acheminé à l'échangeur de chaleur/froid (11) par le biais de la deuxième entrée (E2), le deuxième flux de fluide de chauffage/refroidissement, dans le cas du chauffage, étant régulé à une plus basse température et, dans le cas du refroidissement, à une température plus élevée et la deuxième entrée (E2) au besoin étant étranglée lorsque la première entrée (E1 ou E3) est fermée.

14. Procédé selon la revendication 13, **caractérisé en ce qu'**une source de chaleur/une source de froid (70) avec une température de retour prédéfinie est utilisée et est raccordée au côté de l'échangeur de chaleur (11) opposé au mélangeur.
